# EUROPÄISCHE PATENTSCHRIFT

(11) **EP 4 495 017 B1**
(45) Veröffentlichungstag und Bekanntmachung des Hinweises auf die Patenterteilung: **03.12.2025**
(21) Anmeldenummer: 24188276.0
(22) Anmeldetag: 12.07.2024
(51) Int. Cl.: B65B 5/06, B65B 35/58, B65B 39/00, G01N 35/00, G01N 21/90

(54) **EINSATZ FÜR EINE WENDEVORRICHTUNG, WENDEVORRICHTUNG UND VERFAHREN ZUM WENDEN VON MEDIZINISCHEN AMPULLEN**
INSERT FOR A TURNING DEVICE, TURNING DEVICE AND METHOD FOR TURNING MEDICAL AMPOULES
INSERT POUR DISPOSITIF DE RETOURNEMENT, DISPOSITIF DE RETOURNEMENT ET PROCÉDÉ DE RETOURNEMENT D'AMPOULES MÉDICALES

(30) Priorität: 18.07.2023 DE 102023118975
(43) Veröffentlichungstag der Anmeldung: 22.01.2025
(73) Patentinhaber: Körber Pharma Inspection GmbH, 85570 Markt Schwaben (DE)
(72) Erfinder: Schuster, Tobias, 85661 Pastetten (DE); Heimberg, Wolfgang, 85560 Ebersberg (DE); Müller, Michael, 85567 Grafing (DE); Eberl, Martin, 85567 Grafing (DE)
(74) Vertreter: Müller Schupfner & Partner Patent- und Rechtsanwaltspartnerschaft mbB (Muc)

(56) Entgegenhaltungen:
- DE-A1- 2 913 541

## Beschreibung

Die vorliegende Erfindung betrifft einen Einsatz für eine Wendevorrichtung zum Wenden von medizinischen Ampullen, eine Wendevorrichtung zum Wenden von medizinischen Ampullen und ein Verfahren zum Wenden von medizinischen Ampullen.

Medizinische Ampullen, wie beispielsweise Zylinderampullen oder Karpulen aus Glas sind ein weitverbreitetes Primärpackmittel, um intravenös zu verabreichende Arzneimittel zu transportieren. Solche Ampullen können durch eine Zylinderampullenspritze verabreicht werden. Dies eignet sich beispielsweise besonders gut bei Arzneimitteln, die sich von den Patienten selbst verabreicht werden. Eine solche Zylinderampullenspritze kann mit der Ampulle bestückt werden, sodass es nicht notwendig ist, das Arzneimittel aus der Ampulle zu entfernen (z.B. eine Spritze damit aufzuziehen). Dies kann beispielsweise durch ein Einbringen der Ampulle von hinten in die Zylinderampullenspritze oder durch Einbringen der Ampulle von der Seite erfolgen. Die Ampullen sind entsprechend ausgestaltet und weisen an deren Oberseite einen Anschluss für eine Nadel der Zylinderampullenspritze und an deren Unterseite eine Kontaktfläche für einen Stempel der Zylinderampullenspritze auf.

Grundsätzlich gilt bei intravenös zu verabreichen Arzneimitteln ein erhöhter Kontrollstandard. Dies führt dazu, dass die in den Ampullen aufgenommenen Arzneimittel einer sogenannten 100%-Kontrolle unterzogen werden müssen. Bei der Kontrolle werden beispielsweise optische Kontrollverfahren angewendet, um zu bestimmen, ob Verunreinigungen, Partikel oder sonstige Anomalitäten in den Ampullen vorzufinden sind. Da die Ampullen üblicherweise von der Seite, an welcher der Stempel der Zylinderampullenspritze an der Ampulle angreift, befüllt werden, kommen die gefüllten Zylinderampullen mit dem Stempelkontaktelement nach oben gerichtet aus der Abfüllung. Um eine sichere und zufriedenstellende Inspektion der Ampullen durchführen zu können, müssen die Ampullen gedreht werden. Dies ist unter anderem darin begründet, dass das Spritzenkontaktelement der Ampulle einen Teil der Ampulle bzw. des darin enthaltenen Arzneimittels verdeckt, sodass eine visuelle Inspektion des gesamten Inhalts der Ampullen nicht in jeder Orientierung der Ampulle möglich ist.

Daher ist ein Wenden der Ampullen vor der Inspektion der selbigen notwendig. Im Stand der Technik werden die Ampullen einzeln bzw. reihenweise mittels einem Wendestern, einem Transportband mit Umlenkung oder mittels Robotern gewendet. Dies hat den Nachteil, dass die Ampullen auf Teilung (d. h. in einen gewissen Produktabstand) gebracht werden müssen, wodurch eine Abfertigungsgeschwindigkeit der Ampullen begrenzt ist. Ferner sind bekannte Wendeanlagen meist sehr große Anlagen und haben daher einen großen Platzbedarf. Darüber hinaus werden die Ampullen so transportiert, dass ein Kontakt zwischen den einzelnen Ampullen vermieden ist, da die aus Glas gefertigten Ampullen bei einem Glas-Glas-Kontakt anfällig für Beschädigungen sind.

Daher ist es eine Aufgabe der vorliegenden Erfindung unter Berücksichtigung der obigen Randbedingungen eine Vorrichtung und ein Verfahren bereitzustellen, die ein effizientes Wenden von medizinischen Ampullen ermöglichen.

Das obige Problem wird mit einer Vorrichtung und einem Verfahren mit den Merkmalen der unabhängigen Ansprüche gelöst. Zu bevorzugende Ausführungsformen sind in den Unteransprüchen angegeben.

Gemäß einem Aspekt der vorliegenden Erfindung wird ein Einsatz zum Wenden von medizinischen Ampullen bereitgestellt. Der Einsatz umfasst einen Einführabschnitt, der eine Vielzahl von Einführöffnungen zur Aufnahme von jeweils einer Ampulle aufweist, wobei die Einführöffnungen in einer ersten Anordnungsstruktur vorgesehen sind. Ferner umfasst der Einsatz einen Ausgabeabschnitt, der eine Vielzahl von Ausgabeöffnungen zur Ausgabe von jeweils einer Ampulle aufweist, wobei die Ausgabeöffnung in einer zweiten Anordnungsstruktur vorgesehen sind. Ferner umfasst der Einsatz einen Übergangsabschnitt, der eine Vielzahl von Führungsmittel aufweist, wobei der Übergangsabschnitt so angeordnet und/oder ausgestaltet ist, dass Ampullen von den Einführöffnungen durch die Führungsmittel geführt zu den Ausgabeöffnungen gelangen können. Die Einführöffnungen und die Ausgabeöffnung sind relativ zueinander exzentrisch angeordnet.

Gegenüber dem bekannten Stand der Technik liefert die vorliegende Erfindung den Effekt, dass auch beliebige Anordnungsstrukturen von medizinischen Ampullen effizient gehandhabt werden können. Eine Anordnungsstruktur kann hierbei eine Verteilung der medizinischen Ampullen in einer Ebene (beispielsweise entlang einer X-Richtung und einer orthogonal dazu zustehenden Y-Richtung) sein. Unter den Randbedingungen, dass ein direkter Kontakt der Ampullen (Stichwort Glas-Glaskontaktvermeidung) vermieden werden soll und gleichzeitig eine möglichst große Anzahl an Ampullen auf geringem Raum angeordnet sein müssen, kommt es zu verschiedenen Anordnungsstrukturen, die nicht symmetrisch sind, wenn diese gewendet werden. Damit kann ein in einem Transportbehälter bereitgestellter Array von Ampullen nicht ohne Weiteres gedreht bzw. gewendet werden, da dies zu einer Anordnungsstruktur führen würde, die nicht zu dem Transportbehälter oder weiteren Abfertigungsverfahren passen würde. Ferner würde es zu Problemen bei einer Identifizierung der Ampullen kommen, da eine Position der Ampullen nicht mehr nachvollziehbar wäre. Die vorliegende Erfindung kann durch den Einsatz die Ampullen jedoch von den Einführöffnungen zu den Ausgabeöffnungen so führen, dass die Ampullen nach einem Wenden in der gewünschten oder vordefinierten Anordnungsstruktur vorliegen. Dadurch können eine große Anzahl von Ampullen gleichzeitig gedreht oder gewendet werden, was den Prozessablauf erheblich beschleunigt und dadurch die Effizienz erhöht.

Die medizinischen Ampullen können aus Glas gefertigt sein und ein Aufnahmevolumen in deren Inneren von bis zu 20 ml aufweisen. Die Ampullen können geeignet sein, in genesteten Behältern aufgenommen zu werden. Die Ampullen können in einer ersten Seite einen Kontaktabschnitt für eine Spritze (Spritzenkontaktelement) einer Ampullenspritze aufweisen. An einem zweiten, gegenüberliegenden Ende der Ampulle, kann die Ampulle einen Stempelabschnitt (Stempelkontaktelement) aufweisen, der mit einem Stempel einer Ampullenspritze zusammenwirken kann. Ampullen werden üblicherweise mit dem Stempelabschnitt nach oben gerichtet (hinsichtlich einer Schwererichtung) befüllt. Inspiziert werden die Ampullen üblicherweise in einer gewendeten oder gewendeten Ausrichtung (d. h. mit dem Spritzenkontaktelement nach oben, hinsichtlich einer Schwererichtung). Die Ampullen können auch Spritzen ohne Kragen sein (d.h. ein hängender Transport ist nicht möglich).

Der Einführabschnitt kann ein Aufnahmebereich des Einsatzes definieren, in welchen die Ampullen in den Einsatz hineingleiten können. Die Anordnungsstruktur, in welcher Einführöffnungen vorgesehen kann den Halteabschnitten für die bereitgestellten Ampullen entsprechen. Die Ampullen können in einer Haltestruktur (dem so genannten Nest) bereitgestellt sein. Jede Ampulle kann in einem Halteabschnitte gehalten sein. In einer Draufsicht kann die Haltestruktur der Ampullen ein Rautenmuster bilden. Jeder Halteabschnitte kann in der Form einer Raute ausgestaltet sein. Hierbei kann ein Glas-Glaskontakt zwischen den Ampullen, die jeweils in einem Halteabschnitt gehalten ist, vermieden werden und gleichzeitig die größtmögliche Anzahl von Ampullen in einer Fläche angeordnet werden. Dreht man eine solche Anordnungsstruktur von Ampullen jedoch um 180°, so dass Spritzenkontaktelement und Stempelkontaktelement ihre Positionen tauschen, so sind die einzelnen Halteabschnitte, welche durch eine einzelne Raute der Anordnungsstruktur definiert sind, nicht deckungsgleich. Daher unterscheidet sich die Anordnung der Einführöffnungen von der Anordnung der Ausgabeöffnungen voneinander. Somit können Ampullen, die aus den Ausgabeöffnungen austreten wieder in eine identisch ausgebildete Haltestruktur eingeführt werden, wie die, aus denen die Ampullen entnommen wurden. Insbesondere kann die erste Anordnungsstruktur der Anordnung der Ampullen in einer nicht gedrehten Orientierung entsprechen, und die zweite Anordnungsstruktur kann der Anordnung der Ampullen in einer gedrehten Ausrichtung entsprechen. Die nicht gedrehte Ausrichtung und die gedrehte Ausrichtung können sich hierbei um einen Drehwinkel von 180° unterscheiden. Der Ausgabeabschnitt kann ein Bereich des Einsatzes sein, an welchem die Ampullen den Einsatz wieder verlassen. Der Übergangsabschnitt kann den Einführabschnitt und den Ausgabeabschnitt verbinden. Der Übergangsabschnitt kann hierbei Führungsmittel aufweisen, die Beispielweise in Form eines kanalartigen Abschnitts oder auch in Form eines Gitterabschnitts realisiert sein kann. Der Übergangsabschnitt (z.B. die Führungsmittel) können hinsichtlich des Einführabschnitts und/oder des Ausgabeabschnitts geneigt sein. Damit kann eine Verlagerung der Ampullen von der ersten Anordnungsstruktur zu der zweiten Anordnungsstruktur sichergestellt sein .Wichtig ist, dass die Führungsmittel in der Lage sind, eine Ampulle von einer Einführöffnung zu einer Ausgabeöffnung zu führen (d.h. zu leiten). Unter Führen wird vorliegend verstanden, dass eine Bewegungsrichtung einer Ampulle vorgegeben ist. Die Bewegungsrichtung kann dabei von dem Führungsmittel im dreidimensionalen Raum variabel sein. Mit anderen Worten kann eine Bewegungsrichtung im dreidimensionalen Raum so gestaltet sein, dass sich alle drei Raumkoordinaten einer geführten Ampulle ändern. Ferner kann der Einführabschnitt und/oder der Ausgabeabschnitt relativ zueinander geneigt sein. Damit kann eine Aufnahme von Ampullen vereinfacht werden, wenn der Einsatz um eine Achse (z.B. die erste Achse) gedreht wird. Hierbei kann ein frühzeitiges Einführen oder Eingleiten der Ampullen in den Einsatz realisiert sein. Dasselbe kann analog bei dem Ausgabeabschnitt gelten. Eine Einführungsöffnung kann hierbei direkt mit einem Führungsmittel verbunden sein. Stromabwärts des Führungsmittels kann die Ausgabeöffnung direkt mit dem Führungsmittel in Kontakt stehen. Mit anderen Worten kann eine Einführöffnung, ein Führungsmittel und eine Ausgabeöffnung eine Einheit bilden, die dazu ausgestaltet ist, eine Ampulle von der ersten Anordnungsstruktur in die zweite Anordnungsstruktur zu überführen. Die Bezeichnung Einführabschnitt und Ausgabeabschnitt kann hierbei abhängig von der Orientierung des Einsatzes sein. Mit anderen Worten kann der Abschnitt des Einsatzes, welcher in der Schwererichtung oben ist, als der Einführabschnitt dienen und der Abschnitt des Einsatzes, der in der Schwererichtung unten ist, als der Ausgabeabschnitt. Mit anderen Worten können sich diese Bezeichnungen bei einem Drehen des Einsatzes (d. h. bei einer Umorientierung des Einsatzes) ändern. Die Bewegungsrichtung einer Ampulle durch den Einsatz bleibt jedoch von dem Einführabschnitt über den Übergangsabschnitt zu dem Ausgabeabschnitt gleich (stromaufwärts beginnend bei dem Einführabschnitt über den Übergangsabschnitt bis stromabwärts zu dem Ausgabeabschnitt, d.h. in der Hauptbewegungsrichtung). Die Ausgabeöffnungen und die Einführöffnungen können dabei so relativ zueinander angeordnet sein, dass diese exzentrisch zueinander angeordnet sind. Unter exzentrisch wird vorliegend verstanden, dass die Einführöffnungen und die Ausgabeöffnungen so angeordnet sind, dass sie nicht koaxial angeordnet sind. Mit anderen Worten können die Einführöffnungen und die Ausgabeöffnung zueinander verlagert sein. Daher kann bei einem Wendevorgang der Ampullen eine andere Anordnungsstruktur an der Ausgabeöffnung bereitgestellt sein als dies an den Einführöffnungen der Fall ist. Mit anderen Worten kann sich die erste Anordnungsstruktur von der zweiten Anordnungsstruktur unterscheiden (z.B. nicht deckungsgleich sein). Dies bietet den Vorteil, dass Ampullen, welche in einer unsymmetrischen Anordnungsstruktur bereitgestellt werden, auch bei einem Wenden wieder in eine unsymmetrisch Anordnungsstruktur überführt werden können. Dadurch kann selbst bei einer solchen Anordnungsstruktur (welche die beste Ausnutzung einer zur Verfügung stehenden Fläche bietet) wieder in eine solche Anordnungsstruktur überführt werden. Dadurch kann ein individuelles Wenden der Ampullen vermieden werden und eine große Anzahlen von Ampullen gleichzeitig gewendet werden. Dies vermeidet eine Teilung der Ampullen, um einen bestimmten Produktabstand bereitzustellen und kann eine hohe Abfertigungsgeschwindigkeit (beispielsweise 1000 Ampullen pro Minute) realisieren. Der Übergangsabschnitt kann beweglich sein, so dass eine Zuordnung von Eingangsöffnungen und Ausgabeöffnungen verändert werden kann. Damit kann der Einsatz an verschiedene Ausgangssituationen (z.B. an verschiedene Anordnungsstrukturen beispielsweise in einem Nest) angepasst werden. Der Übergangsabschnitt kann beispielsweise relativ zu ein Eingangsöffnungen und/oder den Ausgabeöffnungen variable sein. Beispielsweise kann der Übergangsabschnitt verformbar und/oder verschiebbar sein. Ferner ist denkbar, dass auch der Einführabschnitt und/oder der Ausgabeabschnitt mit verformbar und/oder verschiebbar ist. Damit kann der Einsatz noch besser an verschiedene Ausgangssituationen angepasst werden.

Vorzugsweise unterscheiden sich die erste Anordnungsstruktur und die zweite Anordnungsstruktur insbesondere hinsichtlich ihrer räumlichen Anordnung. Mit anderen Worten können die Koordinaten im Raum (d. h. die Raumkoordinaten) einer Einführöffnung und einer dieser Einführöffnung über den Übergangsabschnitt zugeordneten Ausgabeöffnung voneinander abweichen. Genauer gesagt können zumindest zwei Raumkoordinaten unterschiedlich sein. Dadurch kann erreicht werden, dass für eine gegebene erste Anordnungsstruktur (d. h. eine Struktur, in welcher die Ampullen bereitgestellt werden) eine beliebige zweite Anordnungsstruktur (d. h. eine Struktur, in welcher die Ampullen gewendet ausgegeben werden) bereitgestellt ist.

Vorzugsweise sind die Einführöffnungen und die Ausgabeöffnungen hinsichtlich einer geometrischen Ausgestaltung der jeweiligen Öffnungen identisch ausgebildet. Mit anderen Worten kann also eine Einführöffnung und eine dieser Einführöffnung zugeführt geordnete Ausgabeöffnung denselben geometrischen Querschnitt aufweisen. Beispielsweise kann sowohl die Einführöffnung als auch die Ausgabeöffnung einen kreisrunden Querschnitt aufweisen. Alternativ kann sowohl die Einführöffnung als auch die Ausgabeöffnung eine rechteckigen Querschnitt aufweisen. Damit kann erreicht werden, dass beide geometrischen Ausgestaltungen sowohl als Einführöffnung als auch als Ausgabeöffnung dienen können. Damit kann durch Umorientierung des Einsatzes sowohl die oben angeordnete Geometrie als Einführöffnung dienen als auch die darunter angeordnete Geometrie (jeweils betrachtet in der Schwererichtung) als Ausgabeöffnung verwendet werden. Dadurch kann ein nahtloses Arbeiten des Einsatzes realisiert sein, ohne dass es notwendig ist, den Einsatz jedes Mal in eine bestimmte Ausgangsposition zurückzudrehen.

Vorzugsweise sind die Einführöffnungen und die Ausgabeöffnungen einer Draufsicht auf den Einsatz versetzt zueinander angeordnet. Somit kann realisiert sein, dass die Ausgabeöffnungen in einer Draufsicht auf den Einsatz nicht deckungsgleich mit den Ausgabeöffnungen angeordnet sind. Die Draufsicht auf den Einsatz kann entlang der Haupttransportrichtung der Ampullen von den Einführöffnungen zu den Ausgabeöffnungen definiert sein. Die Haupttransportrichtung kann sich entlang der Schwererichtung erstrecken. Bei manchen Ausführungsformen ist die Haupttransportrichtung jedoch relativ zu der Schwererichtung geneigt. Damit kann ein versetztes Anordnen der Ampullen an den Ausgabeöffnungen hinsichtlich der ursprünglichen Anordnungen an den Einführöffnungen realisiert sein.

Vorzugsweise sind der Einführabschnitt, der Ausgabeabschnitt und der Übergangsabschnitt integral ausgebildet. Mit anderen Worten kann der Einsatz als ein einstückiges (d. h. integrales) Bauteil ausgebildet sein. Dies vereinfachte die Herstellung des Einsatzes und verhindert Fehler bei einem etwaigen zusammensetzen eines mehrstückigen Systems.

Vorzugsweise wird eine Ampulle durch jedes Führungsmittel entlang eines Führungswegs geführt, wobei die Führungsmittel so ausgestaltet sind, dass der Führungsweg verschwenkt ist. Somit können durch die Führungsmittel die Ampullen, die an dem Einführabschnitt dem Einsatz zugeführt werden, in eine beliebige zweite Anordnungsstruktur überführt werden. Ferner können somit die Raumkoordinaten von einer initialen Position, in welcher die Ampullen dem Einführabschnitt zugeführt werden, zu einer neuen Position, in welcher die Ampullen aus dem Ausgabeabschnitt aus dem Einsatz ausgegeben werden, geändert werden. Hierbei können vorzugsweise alle drei Raumkoordinaten geändert werden.

Vorzugsweise weisen die Einführöffnungen, die Ausgabeöffnungen und/oder die Führungsmittel einen im Wesentlichen runden Querschnitt auf. Mit anderen Worten kann der Querschnitt der Bereich sein, der den Durchgangspfad für eine Ampulle von der Einführöffnung zu deren zugeordneten Ausgabeöffnung definiert. Der Vorteil, der sich durch identische Querschnitte ergibt, ist, dass eine Herstellung vereinfacht sein kann (beispielsweise hinsichtlich Formgestaltung bei Spritzgussteilen). Alternativ ist es zu bevorzugen, dass zumindest die Einführöffnungen und die Ausgabeöffnung einen im Wesentlichen gleichen Querschnitt aufweisen.

Die Führungsmittel können beispielsweise auch ein Strukturelement sein, das die Ampullen punktweise oder abschnittsweise kontaktiert, um diese in die richtige Richtung zu lenken. Hierbei ist denkbar, dass die Führungsmittel auch als eine Art Gitterrahmen ausgestaltet sind. Durch Vorsehen derselben Querschnitte in den Einführöffnungen und den Ausgabeöffnungen kann vorteilhaft realisiert sein, dass unabhängig von der Orientierung des Einsatzes, die Einführöffnungen mit den Ausgabeöffnungen getauscht sein können. Im Wesentlichen kann im vorliegenden Fall bedeuten, dass hierbei keine strikt runde Form vorausgesetzt ist, sondern auch Formen umfasst sind, die beispielsweise 5% von der ideal runden Form abweichen. Damit kann Fertigungstoleranzen Rechnung getragen werden. Vorzugsweise weisen die Einführöffnungen, die Ausgabeöffnungen und/oder die Führungsmittel einen im Wesentlichen U-förmigen Querschnitt auf. Dies bietet den Vorteil, dass der Einsatz schichtweise hergestellt werden kann. Jede Schicht kann ein zumindest eine Eingangsöffnung, zumindest eine Ausgabeöffnung und zumindest ein Führungsmittel aufweisen. Die Führungsmittel können zu einer Seite der Schicht geöffnet sein. Dadurch kann jedes Führungsmittel (und ggf. jeder Einführabschnitt und/oder Ausgabeabschnitt) der Schicht beispielsweise mittel Kugelfräser ausgebildet werden. Die einzelnen Schichten können dann zusammengefügt werden. Dadurch kann das Führungsmittel durch eine angrenzende Schicht geschlossen sein. Mit anderen Worten kann jede Schicht als eine gefräste Scheibe realisiert sein. Hierbei kann der Querschnitt aus fertigungstechnischen Gründen (Kugelfräser von der Seite) einem "U" entsprechen.

Vorzugsweise ist der Einsatz so ausgestaltet, dass die Ampullen von dem Einführabschnitt gravitationsgetrieben zu dem Ausgabeabschnitt gelangen können. Mit anderen Worten muss der Einsatz keinen Aktuator oder keine Antriebsvorrichtung (wie beispielsweise eine Saugvorrichtung oder dergleichen) umfassen, die dafür sorgt, dass die Ampullen von dem Einführabschnitt zu dem Ausgabeabschnitt gelangen. Beispielsweise kann eine gravitationsgetriebene Bewegung der Ampulle realisiert sein. Dies kann beispielsweise durch eine Umorientierung und/oder Verlagerung des Einsatzes realisiert sein. So kann beispielsweise eine Ampulle an zumindest einer Einführöffnung vorgesehen werden, woraufhin durch eine Drehung des Einsatzes um ungefähr 180° die Ampulle gravitationsgetrieben in Bewegung überführt wird und durch den Übergangsabschnitt zu dem Ausgabeabschnitt transferiert wird. Dadurch, dass kein separater Aktuator oder dergleichen vorgesehen sein muss, um die Bewegung der Ampulle zu bewirken, kann das System insgesamt einfacher ausgestaltet sein.

Vorzugsweise umfasst jedes Führungsmittel zumindest einen Bremsabschnitt, der dazu ausgestaltet ist, eine Bewegungsgeschwindigkeit einer Ampulle beim Führen von dem Einführabschnitt zu dem Ausgabeabschnitt zu reduzieren. Dadurch kann sichergestellt sein, dass selbst empfindliche Ampullen, welche durch den Einsatz gewendet werden, nicht zu Schaden kommen. Durch den Bremsabschnitt kann eine maximal zulässige Bewegungsgeschwindigkeit der Ampulle definiert sein. Der Bremsabschnitt kann beispielsweise ein elastisches Vorsprungelement sein, welches in den Bewegungspfad, der durch das Führungsmittel definiert wird, hineinragen. Bei Passieren des Bremsabschnitts durch eine Ampulle, kann die Ampulle mit dem Bremsabschnitt in Kontakt kommen und der Bremsabschnitt die Ampulle abbremsen (d. h. die Geschwindigkeit reduzieren). Ferner ist denkbar, dass der Bremsabschnitt ein Abschnitt mit erhöhter Reibung zwischen Ampulle und Führungsmittel ist, sodass eine Bewegungsgeschwindigkeit der Ampulle reduziert sein kann. So kann beispielsweise das Führungsmittel einen Abschnitt mit erhöhter Reibung aufweisen, wie beispielsweise durch abschnittsweises Vorsehen eines weichen Materials, welches bei Kontakt mit der Ampulle eine Bewegungsgeschwindigkeit der Ampulle reduziert. Dies ist auch vorteilhaft, bei Systemen, bei denen die Ampullen schwerkraftgetrieben von dem Einführabschnitt zu dem Ausgabeabschnitt transferiert werden. Hierbei kann somit die maximale Bewegungsgeschwindigkeit der Ampulle begrenzt werden. Dadurch können Beschädigungen an den Ampullen vermieden werden.

Vorzugsweise ist der Einsatz als ein Formteil ausgebildet. Ein Formteil kann ein Teil bezeichnen, das für einen speziellen Anwendungszweck in einer eigens dafür hergestellten Produktionswerkzeug geformt wurde. Die Bereitstellung des Einsatzes als Formteil bietet darüber hinaus den Vorteil, dass ein Nutzer das Formteil selbst ohne weiteres wechseln kann. Somit können für verschiedene Dimensionen von Ampullen verschiedene Formteile bereitgestellt sein. Ferner können für verschiedene Anordnungsstrukturen (beispielsweise erste Anordnungsstruktur und/oder zweite Anordnungsstruktur) unterschiedliche Formteile bereitgestellt sein. Dadurch kann die Anwendung des Einsatzes weiter vereinfacht sein.

Vorzugsweise grenzen die Einführöffnungen und die Ausgabeöffnungen direkt an die Führungsmittel an. Mit anderen Worten ist zwischen Einführöffnung und Ausgabeöffnung kein weiteres Element angeordnet, als die Führungsmittel, welche dazu ausgestaltet sind, die Ampulle zu führen (d. h. zu lenken). Dadurch kann eine kompakte Abmessung des Einsatzes realisiert sein. Ferner kann dadurch der Weg, den eine Ampulle von dem Einführabschnitt zu dem Ausgabeabschnitt (d. h. von der Einführöffnung zu der Ausgabeöffnung) zurücklegen muss, minimiert werden, was die Gefahr einer Beschädigung der Ampulle verringert.

Vorzugsweise sind die erste Anordnungsstruktur und die zweite Anordnungsstruktur durch eine Anordnung der Einführöffnungen und der Ausgabeöffnungen in einer zweidimensionalen Ebene definiert. Mit anderen Worten kann eine Anordnungsstruktur dadurch charakterisiert sein, wie die Öffnungen des Einführabschnitts und des Ausgabeabschnitts in einer zweidimensionalen Ebene angeordnet sind. Folglich kann eine Anordnungsstruktur auch durch die Anordnung, in welcher die Ampullen dem Einsatz zur Verfügung gestellt werden, definiert sein. Beispielsweise können die Ampullen in einem Behältnis (z.B. in einem Nest, das in einem Tub aufgenommen ist) in einer bestimmten Art und Weise angeordnet sein. Die Anordnung der Ampullen kann der Anordnungsstruktur entsprechen. Die erste Anordnungsstruktur kann dabei die Anordnungsstruktur beschreiben, in welcher die Ampullen dem Einsatz zugeführt werden oder vor der Handhabung der Ampullen durch den Einsatz vorliegen. Die zweite Anordnungsstruktur kann dabei beschreiben, wie die Ampullen, die gewendet wurden, von dem Einsatz ausgegeben werden. Folglich wird die Anordnungsstruktur der Einführöffnungen, d. h. wie die Einführöffnungen angeordnet sind, dadurch definiert, wie die Ampullen dem Einsatz zur Verfügung gestellt werden. Dies kann beispielsweise dadurch definiert sein, wie die Ampullen durch einen Abfüller (d. h. diejenige Person, die die Ampullen mit einem Arzneimittel füllt) ausgeliefert werden. Die zweite Anordnungsstruktur kann demgegenüber durch den Einsatz (d. h. durch die Anordnungsstruktur der Ausgabeöffnungen) definiert sein. Mit anderen Worten kann durch den Einsatz eine beliebige zweite Anordnungsstruktur bereitgestellt werden. Bei einer Ausführungsform der vorliegenden Erfindung ist es vorteilhaft, dass die erste Anordnungsstruktur, welche durch den Abfüller definiert ist, durch einen bestimmten Transportbehälter (beispielsweise ein Nest in einem Tub) vorgegeben ist. Gemäß den obigen Ausführungsformen ist der Einsatz in der Lage, die zweite Anordnungsstruktur (d. h. die Anordnungsstruktur, die von dem Einsatz ausgegeben wird) so zu gestalten, dass die gewendeten Ampullen wieder in den Transportbehälter eingesetzt werden können. Damit bietet sich der Vorteil, dass kein separater oder anders ausgestalteter Transportbehälter notwendig ist, sondern der ursprünglich vom Abfüller bereitgestellte Transportbehälter auch für die gewendeten Ampullen weiterverwendet werden kann. Dies bietet darüber hinaus den Vorteil, dass eine Identifizierungsmethode und Nachverfolgungsmethode, die bei dem Abfüller beginnt, auch im weiteren Verarbeitungsverlauf weiter verwendet werden kann (vorzugsweise mit dem unten beschriebenen Bestimmungsverfahren).

Vorzugsweise umfasst der Einsatz Polyoxymethylene, Polyamid, Polytetrafluorethylen und/oder Polyethylenterephthalat, Polytetrafluorethylen und/oder Polyethylenterephthalat. Polyoxymethylene (POM) zeichnen sich durch hohe Festigkeit, Härte und Steifigkeit in einem weiten Temperaturbereich aus. Dadurch ist es besonders dauerhaft und weist eine hohe Lebenserwartung auf. Auch Polyamid weist eine hohe Festigkeit, Steifigkeit und Zähigkeit auf sowie sehr gute Chemikalienbeständigkeit und Verarbeitbarkeit. Hierbei können beispielsweise über die Amidgruppen der Polyamide weitere Eigenschaften definiert werden. Dies ist abhängig von der konkreten Verwendung des Einsatzes, da hierbei oft aufgrund von Hygieneanforderungen chemische Reinigungen durchgeführt werden müssen. Beispielsweise wird in manchen Bereichen mit Wasserstoffperoxid gereinigt, was viele andere Materialien angreift. Daher ist es vorteilhaft bei dem vorliegenden Einsatz einen hochwertigen Kunststoff zu verwenden, um die Dauerhaftigkeit sicherzustellen. Bei anderen Einsatzgebieten wäre dies unnötig und würde unnötige Kosten darstellen. Ferner ist denkbar, dass Polytetrafluorethylen (PTFE) verwendet wird. PTFE ist beispielsweise auch unter dem Handelsnamen Teflon bekannt. Hierbei ist besonders vorteilhaft, dass ein besonders geringer Reibwert erreicht werden kann, wodurch die Ampullen problemlos durch den Einsatz gehandhabt werden können. Ferner ist PTFE sehr reaktionsträge, weswegen selbst aggressive Säuren PTFE nicht angreifen. Darüber hinaus ist denkbar, dass Polyethylenterephthalat (PET) verwendet werden kann. Auch PET weist eine hohe Beständigkeit gegen Chemikalien auf und ist daher in der Medizintechnik und in der Lebensmittelindustrie weit verbreitet. Zudem weist PET eine hohe mechanische Beständigkeit auf, was ebenfalls eine gesteigerte Dauerhaftigkeit des Einsatzes realisiert.

Vorzugsweise weisen die Ampullen einen Inhalt von max. 20 ml auf. Dadurch können die Ampullen bei Ampullenspritzen zum Einsatz kommen.

Vorzugsweise sind die medizinischen Ampullen in einem Nest angeordnet. Mit anderen Worten können die Ampullen, die dem Einsatz zum Wenden zur Verfügung gestellt werden, in einer Halterung oder einer Haltestruktur (d. h. einem Nest) angeordnet zur Verfügung gestellt werden. Grundsätzlich können die Ampullen aufgrund der Schwerkraft auf ihrem Boden stehen. Mit anderen Worten können die Ampullen in einem Tub auf dem Boden stehen und beispielsweise durch eine gitterartige Struktur (dem Nest) gehalten werden. Demgegenüber werden beispielsweise Spritzen hängend transportiert. Das Nest kann die Ampullen halten. Somit kann das Nest dazu vorgesehen sein, die Ampullen in einer bestimmten Anordnung, insbesondere, beabstandet voneinander, zu halten. Dabei kann das Gewicht durch das Nest und/oder durch andere Elemente wie beispielsweise einem Tub (weitere Details dazu folgen, unten) gehalten werden. Das Nest kann beispielsweise für die erste und/oder zweite Anordnungsstruktur verantwortlich sein.

Vorzugsweise sind die medizinischen Ampullen jeweils in einem Schulterbereich der jeweiligen Ampulle in dem Nest gehalten. Der Schulterbereich der Ampulle kann ein besonders widerstandsfähiger Bereich sein, sodass hier die Ampulle am besten gehalten werden kann, ohne ein Risiko einer Beschädigung zu riskieren.

Ferner kann das Nest dazu ausgestaltet sein, die Ampullen aus dem Tub herauszuheben. Dazu kann das Nest dazu ausgestaltet sein, die Ampullen an einem Bereich zu halten, der angrenzend zu einem relativ dazu dickeren Bereich (z.B. einem Deckelbereich oder einem Spritzenkontaktelement) angeordnet ist. Dadurch können die Ampullen durch das Nest aus dem Tub gehoben werden. Vorzugsweise kann das Nest so ausgestaltet sein, dass die Ampullen nur in einer Richtung gehalten werden können, so dass die Ampullen aus dem Nest ausgekippt werden können.

Vorzugsweise ist das Nest in einem Tub angeordnet. Das Tub kann eine schalenartige Struktur sein, in der das Nest zusammen mit den Ampullen angeordnet ist. Das Nest kann so ausgestaltet sein, dass es passgenau in den Tub hineinpasst. Somit können Relativbewegungen des Nestes relativ zu dem Tub vermieden werden.

Vorzugsweise weist der Tub ein Identifizierungselement auf. Das Identifizierungselement kann beispielsweise indikativ dafür sein, welche Ampulle an welchen Platz in dem Tub und/oder in dem darin vorgesehenen Nest angeordnet ist. Ferner können weitere Informationen durch das Identifizierungselement abgerufen werden, wie beispielsweise Art der Inhaltsstoffe und/oder prozessorientierte Voraussetzungen oder Anforderungen.

Gemäß einem weiteren Aspekt der vorliegenden Erfindung wird eine Wendevorrichtung zum Wenden von medizinischen Ampullen bereitgestellt, umfassend einen Einsatz gemäß einem der vorhergehenden Ausführungsformen. Die Wendevorrichtung umfasst eine Haltevorrichtung zum Halten des Einsatzes. Die Haltevorrichtung ist dazu ausgestaltet, den Einsatz entlang einer ersten Richtung zu bewegen. Die Haltevorrichtung ist dazu ausgestaltet, den Einsatz um eine erste Achse zu drehen. Die Wendevorrichtung kann eine automatisierte Anwendung des Einsatzes gemäß einer der obigen Ausführungsformen darstellen. Mit anderen Worten kann der oben beschriebene Einsatz manuell oder im Zuge einer anderen Handhabung oder Bearbeitung der Ampullen eingesetzt werden. Die nun beschriebene Wendevorrichtung kann eine individuelle Handhabungsvorrichtung sein, die dazu ausgestaltet ist, die Ampullen zu wenden. Vorzugsweise ist die Wendevorrichtung zumindest teilautomatisiert, sodass zumindest einige der Handhabungsschritte voll automatisch ablaufen können. Dadurch kann die manuelle Arbeit reduziert werden und die Effizienz gesteigert werden. Die Haltevorrichtung kann eine strukturelle Vorrichtung sein, die den Einsatz beweglich halten kann. Vorzugsweise ist die Haltevorrichtung eine zweiarmige Vorrichtung, die an einem Außenende des jeweiligen Arms den Einsatz drehbar lagert. Die beiden Arme können mit einem Basisarm verbunden sein. Der Basisarm kann an einem Ständer oder Mast beweglich angeordnet sein. Damit kann realisiert sein, dass die Haltevorrichtung den Einsatz entlang einer ersten Richtung bewegen kann. Die erste Richtung kann dabei entlang der Schwererichtung verlaufen. Durch die drehbare Lagerung des Einsatzes an den beiden Armen der Haltevorrichtung, kann die Haltevorrichtung den Einsatz um eine erste Achse drehen. Vorzugsweise ist der Einsatz so an der Haltevorrichtung gehalten, dass die erste Achse durch einen Schwerpunkt des Einsatzes verläuft. Dadurch kann eine besonders homogene (z.B. ruckfreie) Drehbewegung um die erste Achse realisiert sein.

Vorzugsweise stehen die erste Richtung und die erste Achse orthogonal zueinander. Somit kann durch die Bewegung in der ersten Richtung, die Ampullen aufgenommen werden und anschließend oder zumindest teilweise gleichzeitig durch eine Rotation des Einsatzes um die erste Achse, umgelagert werden. Mit anderen Worten kann durch die Bewegung in der ersten Richtung ein Nest aus einem Tub herausgehoben werden und sobald das Nest aus dem Tub herausgehoben ist, durch eine Drehbewegung eine schwerkraftgetriebene Bewegung der Ampullen initiiert werden, um diese zu einer Bewegung von der Einführöffnung zu der jeweils zugeordneten Ausgabeöffnung (z.B. in der Hauptbewegungsrichtung) zu bewirken.

Vorzugsweise erstreckt sich die erste Richtung entlang der Schwererichtung. Dies bietet den Vorteil, dass die Ampullen, solange sich der Einsatz lediglich in der ersten Richtung bewegt, aufgrund der Schwerkraft an ihrem ursprünglichen Platz verbleiben. Erst durch eine Rotation um die erste Drehachse wird eine Bewegung der Ampullen durch den Einsatz bewirkt.

Vorzugsweise umfasst die Wendevorrichtung einen Aktuator, wobei der Aktuator dazu ausgestaltet sein kann, die Bewegung in der ersten Richtung und/oder die Drehung um die erste Achse auszuführen. Mit anderen Worten kann ausschließlich ein einziger Aktuator vorgesehen sein, der für die Bewegung in der ersten Richtung und die Drehung um die erste Achse zuständig ist. Dies kann beispielsweise über eine mechanische Ansteuerung der Haltevorrichtung bewirkt sein. Durch Vorsehen nur eines einzelnen Aktuators kann die Steuerungselektronik sowie der Steuerungsaufwand reduziert sein. Ferner kann durch einen einzelnen Aktuator (d. h. durch eine mechanische Steuerung beider Bewegungen, d. h. der translatorischen Bewegungen in der ersten Richtung, und der Drehbewegung um die erste Achse) ein synchronisierter Bewegungsablauf realisiert sein, sodass die Bewegung in der gewünschten Reihenfolge und zu einem gewünschten Zeitpunkt ausgeführt werden. Dadurch kann das System einfacher und gleichzeitig zuverlässiger ausgestaltet sein. Vorzugsweise weist die Wendevorrichtung eine Steuereinheit auf, die dazu ausgestaltet sein kann, eine ursprüngliche Position der medizinischen Ampullen zu erlangen und eine neue Position der medizinischen Ampullen nach Verlassen der Ausgangsöffnungen zu bestimmen. Dies ist besonders dann vorteilhaft, wenn die Ampullen in einer bestimmten Anordnung der Wendevorrichtung zugeführt werden. So ist es beispielsweise denkbar, dass ein Tub mit einem Nest voller Ampullen von einem Abfüller bereitgestellt wird, wobei an dem Tub durch Identifizierungsmittel oder sonstige Informationsübermittlung genau festgehalten ist, welche Ampulle an welchem Platz sitzt. Dies ist beispielsweise bei Nachverfolgungssystemen von enormer Wichtigkeit. Werden die Ampullen nun durch die Wendevorrichtung gewendet, muss immer noch klar sein, welche Ampulle an welchem Platz in einem gewendeten Zustand vorzufinden ist. Dies ist abhängig davon, wie der Übergangsabschnitt die Ampullen von den Einführöffnungen zu den Ausgabeöffnungen weiterleitet. Die Steuereinheit kann also basierend auf der Art des Einsatzes, welcher in der Wendevorrichtung vorgesehen ist, bestimmen, welche ursprüngliche Position der Ampulle welcher nach der Wendung vorliegenden Position der Ampulle entspricht. Mit anderen Worten kann die Steuervorrichtung aufgrund von mathematischen Betrachtungen bestimmen, wo welche Ampulle nach dem Wendevorgang durch die Wendevorrichtung angeordnet ist. Dies kann die Steuereinheit dann wieder ausgeben und beispielsweise an eine Datenbank übermittelt. Somit kann auch nach erfolgter Wendung der Ampullen durch die Wendevorrichtung eindeutig bestimmt werden, wo welche Ampulle in dem Nest in dem Tub angeordnet ist.

Vorzugsweise umfasst die Wendevorrichtung eine Haltevorrichtung, die dazu ausgestaltet sein kann, ein erstes Nest mit einer Vielzahl von Ampullenhalteplätzen so zu halten, dass jeweils ein Ampullenhalteplatz einer der Einfuhröffnungen gegenüberliegt. Wie bereits oben beschrieben, wird die erste Anordnungsstruktur dadurch bestimmt, wie dem Einsatz bzw. der Wendevorrichtung die Ampullen zur Verfügung gestellt werden. Der Einsatz ist entsprechend anzupassen. Für eine weitere Automatisierung kann die Wendevorrichtung nun eine Haltevorrichtung aufweisen, die ein Nest so greifen kann, dass die in dem Nest vorhandenen Ampullen genau einer Einführöffnung des Einsatzes gegenüberliegt. Dies bietet den Vorteil, dass bei einer Drehung des Einsatzes um die erste Achse die Ampullen aus dem Nest herausgleiten und in den Einsatz hineingleiten.

Vorzugsweise ist die Haltevorrichtung dazu ausgestaltet, ein zweites Nest mit einer Vielzahl von Ampullenhalteplätzen so zu halten, dass jeweils ein Ampullenhalteplatz einer Ausgabeöffnung gegenüberliegt. Mit anderen Worten kann die Wendevorrichtung zwei Nester durch die Haltevorrichtung halten. Dies ist besonders dann vorteilhaft, wenn die Ampullen wieder in ein Nest bzw. einen Tub zurückgeführt werden sollen (d.h. in einem gewendeten Zustand). Gemäß einer Ausführungsform der vorliegenden Erfindung, werden die Ampullen in ein baugleiches Nest, wie das Nest, aus welchem die Ampullen entnommen worden sind, und in genau denselben Tub zurückgefördert, aus dem die Ampullen entnommen worden sind. Mit anderen Worten wird durch die Wendevorrichtung lediglich die Orientierung der Ampullen geändert, das Transportmittel der Ampullen jedoch gleich beibehalten. Dadurch kann die Wendevorrichtung problemlos in einen bestehenden Prozess eingebunden werden, ohne dass der Prozess strukturell geändert werden müsste. Gemäß der vorliegenden Ausführungsform kann die Wendevorrichtung an deren Einsatz ein erstes Nest an der Seite der Einführöffnungen aufweisen, und ein zweites Nest an der Seite der Ausgabeöffnungen. Die Ampullenhalteplätze in dem jeweiligen Nest können den jeweiligen Einführöffnungen und den Ausgabeöffnungen gegenüberliegen. Somit kann gewährleistet werden, dass die Ampullen von der Einführöffnung durch den Übergangsabschnitt zu einer zugeordneten Ausgabeöffnung transferiert werden können (beispielsweise gravitationsgetrieben). Die Haltevorrichtung kann dazu ausgestaltet sein, das erste Nest und das zweite Nest an dem Einsatz zu halten.

Vorzugsweise ist die Haltevorrichtung eine Saugvorrichtung. Die Saugvorrichtung kann zumindest einen Saugnapf aufweisen, der ein Nest ansaugen kann und somit aus einem Tub herausheben kann. Die Saugvorrichtung kann auch als Sauggreifvorrichtung bezeichnet sein. Dazu kann die Haltevorrichtung dazu ausgestaltet sein, eine Saugkraft auf eine Schulter eines Nests auszuüben, um dieses zu halten. Alternativ kann auch eine mechanische Greifvorrichtung vorgesehen sein, die ein Nest greifen und halten kann.

Vorzugsweise umfasst die Wendevorrichtung zumindest eine Positionierhilfe, die dazu ausgestaltet sein kann, eine vorbestimmte Position eines Nests bei Kontakt des Nests mit der Wendevorrichtung sicherzustellen. Die Positionierhilfe kann also dabei helfen, einen Ampullenhalteplatz in einem Nest einer jeweiligen Öffnung in dem Einsatz zuzuordnen. Dadurch kann stets eine optimale Ausrichtung eines Nests relativ zu dem Einsatz sichergestellt sein. Dadurch kann ein problemloser Betrieb der Wendevorrichtung bereitgestellt sein.

Vorzugsweise umfasst die Positionierhilfe einen Vorsprung, der von der Wendevorrichtung vorspringt, und dazu ausgestaltet sein kann, mit einem Nest zusammenzuwirken. So kann die Positionierhilfe zumindest einen Vorsprung umfassen, der von dem Einsatz vorspringt. Der Vorsprung kann beispielsweise eine sich verjüngende Form zu seinem Außenende hin aufweisen, und mit einer Öffnung an einem Nest zusammenwirken. Nähert sich beispielsweise ein Nest an den Einsatz an, kann der Vorsprung in die Aussparung des Nests hineingeführt werden und durch die Form des Vorsprungs das Nest und/oder die Einführvorrichtung, so führen, dass eine optimale Position zwischen Nest und Einsatz erreicht ist. Dadurch kann die Prozesssicherheit weiter erhöht werden.

Vorzugsweise weist die Wendevorrichtung zumindest ein Distanzelement auf, das dazu ausgestaltet sein kann, einen vorbestimmten Abstand eines Nestes zu der Wendevorrichtung bei Kontakt des Nestes mit der Wendevorrichtung sicherzustellen. Das Distanzelement kann dazu dienen, einen Abstand zwischen dem Einsatz und dem Nest auf ein Minimalmaß zu begrenzen. Dies kann beispielsweise Schäden durch direkten Kontakt mit in dem Nest aufgenommenen Ampullen und dem Einsatz vermeiden. Beispielsweise können dadurch verschieden hohe Ampullen problemlos durch die Wendevorrichtung abgearbeitet werden. Ferner kann auch eine weniger genau steuerbare Greifvorrichtung verwendet werden, die ein Nest greifen kann bzw. halten kann und so zu dem Einsatz führen kann, bis das Distanzelement mit dem Nestelement in Kontakt kommt. Das Distanzelement kann beispielsweise ein Vorsprung sein, der mit einer Schulter des Nestes zusammenwirken kann. Dadurch kann die Prozesssicherheit gesteigert werden und Schäden an den Ampullen vermieden werden.

Ferner ist es denkbar, dass die Steuereinheit die Drehung um die erste Achse so steuern kann, dass die Drehung nicht kontinuierlich, sondern adaptiv bzw. variabel ausgeführt werden kann. Dies bietet den Vorteil, dass ein freies Fallen der Ampullen von dem ersten Nest in Richtung zu dem zweiten Nest (d. h. von der Einführöffnung zu der zugeordneten Ausgabeöffnung) vermieden werden kann. Durch die Drehbewegung um die erste Achse wird die Haftreibung zwischen Ampulle und Nest bzw. Einsatz überwunden und geht in eine Gleitreibung über. Da die Gleitreibung jedoch geringer ist als die Haftreibung, erfolgt eine plötzliche Beschleunigung der Ampulle aufgrund der Schwerkraft. Dazu kann die Steuereinheit so ausgestaltet sein, den Einsatz erst soweit um die erste Achse zu drehen, bis die Haftreibung überwunden ist. Danach kann ein Stopp der Drehbewegung erfolgen, um die Ampulle nicht noch weiter zu beschleunigen. Der Stopp kann nach einem Drehwinkel von zumindest 90° erfolgen. Vorzugsweise erfolgt der Stopp nacheinem Drehwinkel in einem Bereich von 100° bis °135°. Dies hat sich bei der Handhabung von Glasampullen als vorteilhaft herausgestellt, da in diesem Bereich einen Haftreibung überwunden wird. Gemäß einer besonders bevorzugten Ausführungsform kann die Steuereinheit nach Überwinden der Haftreibung sogar ein kurzes Stück in eine entgegengesetzte Richtung drehen, um die Ampulle nicht so stark zu beschleunigen. Beispielsweise kann eine Rückdrehung des Einsatzes um ca. 5° erfolgen. Dadurch können auch besonders empfindliche Ampullen problemlos durch die Wendevorrichtung gehandhabt werden. Sind die Ampullen dann durch den Einsatz hindurchgetreten und in dem zweiten Nest aufgefangen worden, kann die Steuereinheit die restliche Drehung zur Vollendung der 180° Drehung vollführen.

Vorzugsweise umfasst die Wendevorrichtung einen Sensor, der eine Position der Ampullen bestimmen kann. Der Sensor kann beispielsweise ein Schwerpunktsensor sein, der den Schwerpunkt des Einsatzes zusammen mit dem ersten Nest und dem zweiten Nest bestimmen kann. Dadurch, dass ein Nest mit Ampullen gefüllt ist und das andere Nest leer ist, wird der Schwerpunkt nicht auf der ersten Achse liegen. Abhängig davon, wo der Schwerpunkt liegt, kann die Steuereinheit bestimmen, zu welchem Zeitpunkt der Drehbewegung um die erste Achse der Schwerpunkt wo liegt. Damit kann die Steuereinheit auf die derzeitige Position der Ampullen zurückschließen und kann den Bewegungsbeginn der Ampullen (d. h. die Überwindung der Haftreibung) detektieren. Daraufhin kann die Steuereinheit die Drehbewegung um die erste Achse anpassen. Somit kann beispielsweise die Drehbewegung auch langsamer als zu Beginn fortgeführt werden, um die gewünschte Bewegungsgeschwindigkeit der Ampullen zu erreichen. Dies kann automatisch auf Basis von vorgespeicherten Informationen geschehen. Dadurch ist keine individuelle Anpassung beispielsweise bei der Handhabung von Ampullen mit anderen Füllmengen erforderlich. Hierdurch kann eine weitere Steigerung der Betriebssicherheit und eine Verringerung der Beschädigungsrate der Ampullen erreicht werden.

Gemäß einem weiteren Aspekt der vorliegenden Erfindung wird ein Verfahren zum Wenden von medizinischen Ampullen mittels eines Einsatzes bereitgestellt. Das Verfahren umfasst Bereitstellen einer Vielzahl von medizinischen Ampullen in einer ersten Anordnungsstruktur, Aufnehmen der Ampullen in jeweils eine Einführöffnung des Einsatzes, Führen der Ampullen durch ein Führungsmittel des Einsatzes von den Aufnahmeöffnungen zu Ausgabeöffnungen des Einsatzes, Ausgeben der Ampullen aus den Ausgabeöffnung in einer zweiten Anordnungsstruktur, wobei sich die erste Anordnungsstruktur von der zweiten Anordnungsstruktur unterscheidet.

Vorzugsweise werden die Ampullen in einem ersten Nest bereitgestellt, wobei das Verfahren ein Halten des ersten Nestes an dem Einsatz umfasst. Das Halten kann beispielsweise durch eine Sauggreifvorrichtung realisiert sein. Vorzugsweise werden die Ampullen in ein zweites Nest ausgegeben, wobei das zweite Nest an dem Einsatz gehalten ist. Das zweite Nest kann dabei dieselben geometrischen Abmessungen wie das erste Nest aufweisen. Das erste Nest kann so an dem Einsatz gehalten sein, dass die Ampullen in die Einführöffnungen eingeführt werden können. Das zweite Nest kann so an dem Einsatz gehalten sein, dass die von dem Einsatz ausgegebenen Ampullen an den Ausgabeöffnungen dem zweiten Einsatz zugeführt werden können. Vorzugsweise umfasst das Verfahren ein Bewegen des Einsatzes, sodass die Ampullen schwerkraftgetrieben von den Einführöffnungen zu den Ausgabeöffnungen durch das Führungsmittel geführt werden. Vorzugsweise umfasst das Bewegen ein Drehen des Einsatzes um eine erste Achse. Vorzugsweise wird das erste Nest in einem Tub bereitgestellt und wobei das erste Nest aus dem Tub entlang einer ersten Richtung herausgehoben wird. Vorzugsweise wird das zweite Nest mit den Ampullen in den Tub eingeführt, aus welchem das erste Nest entnommen wurde. Somit können die Ampullen demselben tub zugeführt werden, aus welchem sie entnommen wurden. Mit anderen Worten bleiben Identifizierungsmittel, die an dem Tub vorgesehen sind, auch nach dem Wendevorgang für die Ampullen gültig. Vorzugsweise umfasst das Verfahren ein Aufnehmen einer Identifizierung des Tubs, in welchen die Ampullen bereitgestellt werden.

Vorzugsweise umfasst das Verfahren ferner ein Bestimmen einer neuen Position der Ampullen in dem zweiten Nest. Dann kann das Verfahren die Informationen über die neue Position der Ampullen in dem Tub ausgeben und dem weiteren Verfahren zugrunde legen. Nach der Wendung der Ampullen, können die Ampullen einer Inspektion zugeführt werden. Vorzugsweise können in jedem Tub 120 Ampullen vorgesehen sein. Mit anderen Worten können 120 Ampullen auf einmal gewendet werden. Vorzugsweise weist ein mittlerer Abstand zwischen den Ampullen in einem Nest ungefähr 11,6 mm auf.

Gemäß einem weiteren Aspekt der vorliegenden Erfindung wird eine Verwendung eines Einsatzes gemäß einer obigen Ausführungsform zum Wenden von medizinischen Ampullen bereitgestellt. Insbesondere wird eine Verwendung des Einsatzes in einer der obigen Wendevorrichtungen bereitgestellt. Dadurch kann ein vorteilhafter Prozessablauf mit gesteigerter Effizienz bereitgestellt werden.

Einzelne Merkmale der obigen Ausführungsformen sind mit anderen Ausführungsformen oder anderen Merkmalen kombinierbar und bilden so neue Ausführungsformen. Ausgestaltungen und Vorteile, die in Zusammenhang mit den Merkmalen oder den Ausführungsformen genannt sind, gelten dann analog auch für die neuen Ausführungsformen. Vorteile und Ausgestaltungen, die in Zusammenhang mit dem Verfahren genannt sind, gelten analog auch für die Vorrichtung und andersherum.

Im Folgenden werden zu bevorzugende Ausführungsformen im Detail mit Bezug auf die beigefügten Figuren beschrieben.
- **Fig. 1**: ist ein schematischer Schnitt durch einen Einsatz gemäß einer Ausführungsform der vorliegenden Erfindung.
- **Fig. 2**: ist eine schematische und perspektivische Ansicht eines Tubs, Nests und einer Vielzahl von Ampullen wie sie bei einer Ausführungsform der vorliegenden Erfindung verwendet werden.
- **Fig. 3**: ist eine schematische Ansicht eines mit Ampullen gefüllten Nestes.
- **Fig. 4**: ist eine schematische Ansicht eines mit Ampullen gefüllten Nestes, welches in einem Tub aufgenommen ist, wie es einer Wendevorrichtung gemäß einer Ausführungsform der vorliegenden Erfindung bereitgestellt wird.
- **Fig. 5**: ist eine schematische und perspektivische Ansicht einer Wendevorrichtung gemäß einer Ausführungsform der vorliegenden Erfindung.
- **Fig. 6**: ist eine schematische Seitenansicht einer Wendevorrichtung gemäß einer Ausführungsform der vorliegenden Erfindung.
- **Fig. 7**: ist eine schematische und perspektivische Ansicht eines Einsatzes gemäß einer Ausführung der vorliegenden Erfindung, wie er bei einer Wendevorrichtung gemäß einer Ausführungsform der vorliegenden Erfindung verwendet werden kann.
- **Fig. 8**: ist eine schematische und perspektivische Ansicht einer Wendevorrichtung gemäß einer Ausführungsform der vorliegenden Erfindung.
- **Fig. 9**: sind eine Vielzahl von schematischen und perspektivischen Ansichten einer Wendevorrichtung im Betrieb gemäß einer Ausführungsform der vorliegenden Erfindung.

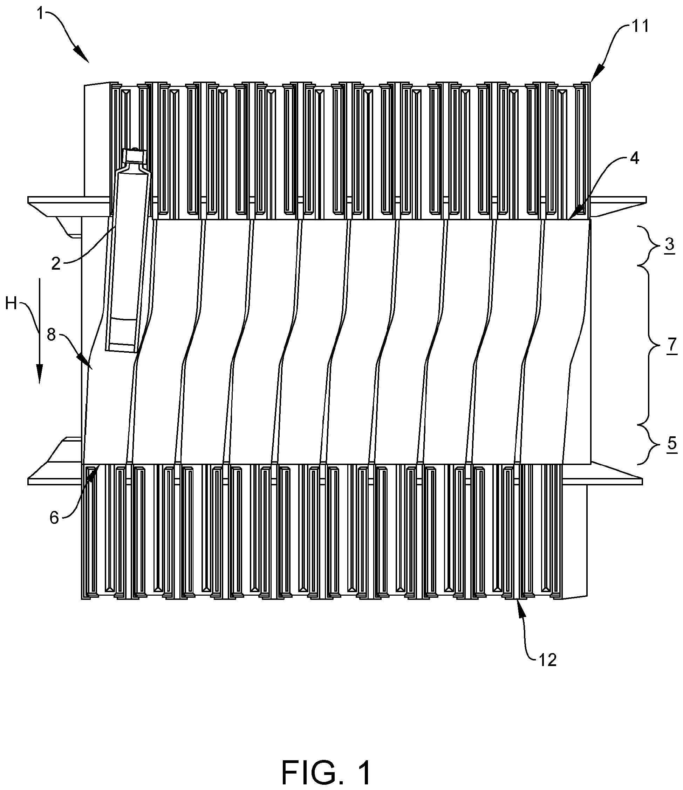

**Fig. 1** ist eine schematische Schnittansicht eines Einsatzes 1 gemäß einer Ausführungsform der vorliegenden Erfindung. Der Einsatz 1 weist einen Einführabschnitt 3, einen Übergangsabschnitt 7 und einen Ausgabeabschnitt 5 auf. Der Einführabschnitt 3 weist eine Vielzahl von Einführeröffnungen 4 (in der Fig. 1 ist nur eine Einführöffnung mit dem Bezugszeichen 4 bezeichnet) auf. Der Einsatz 1 ist dazu ausgestaltet, medizinische Ampullen 2 weiterzuleiten. Mit anderen Worten kann der Einsatz die Ampullen 2 transportieren und ein einer anderen Raumposition wieder ausgeben. Dazu können die Ampullen 2 an dem Einführabschnitt 3 durch die Einführöffnungen 4 aufgenommen werden. Hierbei kann jede Einführöffnung 4 nur eine Ampulle 2 aufnehmen. Anschließend (d. h. stromabwärts) können die Ampullen 2 in einen Übergabeabschnitt 7 gelangen. Der Übergabeabschnitt 7 weist eine Vielzahl von Führungsmittel 8 auf, die dazu ausgestaltet sind, die Ampullen 2 zu führen. Die Führung der Ampullen 2 besteht bei der vorliegenden Ausführungsform darin, die Ampullen 2 an einem anderen Ort wieder auszugeben. Die Ausgabe der Ampullen 2 erfolgt über den Ausgabeabschnitt 5, der eine Vielzahl von Ausgabeöffnungen 6 aufweist. Die Ampullen 2 können beispielsweise in einem ersten Nest 11 (oben in der Fig. 1) bereitgestellt werden. Die Ampullen 2 können dann aus dem ersten Nest 11 austreten, über die Einführöffnungen 4 in den Einsatz 1 eintreten, durch den Übergangsabschnitt 7 bzw. die darin vorgesehenen Führungsmittel 8 geführt werden und letztlich durch Ausgabeöffnungen 6 aus dem Einsatz 1 austreten. Angrenzend an die Ausgabeöffnungen 6 kann ein zweites Nest 12 angeordnet sein, in das die Ampullen 2 eingeführt werden können, nachdem sie den Einsatz 1 verlassen. Es muss nicht zwangsläufig ein zweites Nest 12 vorgesehen sein, sondern es können auch andere Vorrichtungen zum Auffangen der Ampullen bereitgestellt sein. Hier ist beispielsweise denkbar, dass die Ampullen 2 direkt in einem Prozess weiterverarbeitet werden. Gemäß einer bevorzugten Ausführungsform werden die Ampullen 2 jedoch in ein zweites Nest 12 eingeführt, nachdem sie die Ausgabeöffnungen 6 verlassen haben, wobei das zweite Nest 12 identisch zu dem ersten Nest 11 ausgestaltet ist. Bei dem Durchtritt der Ampullen 2 durch den Einsatz 1 werden die Ampullen 2 entlang einer Hauptförderrichtung H (siehe Pfeil in Fig. 1), transportiert. Mit anderen Worten werden die Ampullen 2 durch den Einsatz 1 in allen drei Raumrichtungen (X, Y und Z-Richtung) verlagert.

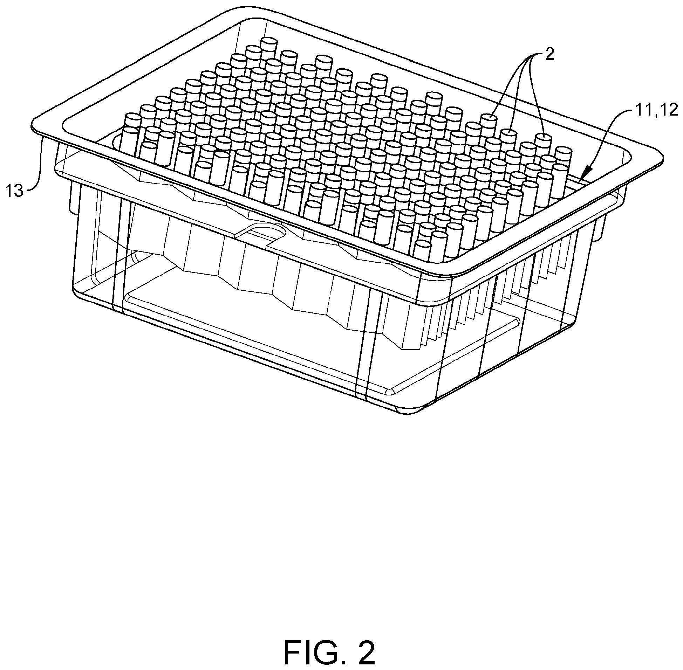

**Fig. 2** ist eine schematische und perspektivische Ansicht eines Nestes 11, 12, mit einer Vielzahl von darin aufgenommener Ampullen 2. Das Nest ist in einem Tub 13 angeordnet. Tubs 13 mit Nestern werden üblicherweise verwendet, um die mit Arzneimittel gefüllten Ampullen 2 von einem Abfüller zu einer weiteren Prozesseinheit zu transportieren. Das Nest 11, 12 und der Tab 13 sind oft dampfsterilisiert, um eine unbedenkliche Handhabung auch in sterilen Zonen zu ermöglichen. Das Nest 11, 12 ist dafür da, um einen direkten Kontakt zwischen den Ampullen 2 zu vermeiden. Somit kann ein Glas-Glas-Kontakt vermieden werden, wodurch Beschädigungen an den Ampullen 2 reduziert sein können. Um die größtmögliche Anzahl von Ampullen in einem Nest 11, 12 unterzubringen, sind die Ampullen in einer ersten Anordnungsstruktur in dem Nest 11, 12 angeordnet. Wenn diese Ampullen 2 von einem Abfüller kommen, sind diese mit einer Bodenseite nach oben orientiert, da der Abfüller die Ampullen, welche zur Verwendung in Ampullenspritzen vorgesehen sind, von unten befüllt. Sollen die Ampullen 2 daraufhin visuell inspiziert werden, ist es notwendig, die Ampullen zu wenden. Dies liegt daran, dass in dem oberen Bereich der Ampullen (d. h. der Bereich, in dem die Spritze ansetzt und die Arzneimittel aus der Ampulle entnommen werden) einen Teil der Ampulle bzw. deren Inhalt verdeckt. Daher müssen die Ampullen gewendet bzw. umgedreht werden. In der in Fig. 2 angeordneten Situation sind die Ampullen bereits richtig orientiert, um eine Inspektion zu durchlaufen.

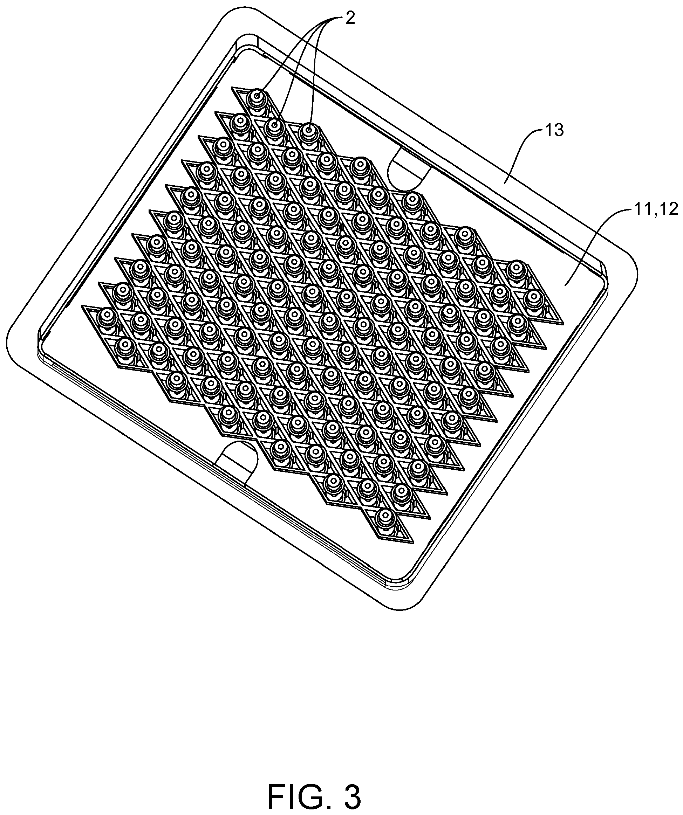

**Fig. 3** ist eine perspektivische und schematische Ansicht eines Nestes 11, 12, das in einem Tab 13 aufgenommen ist, von einer schräg von oben aus betrachteten Ansicht. Hier ist zu erkennen, dass die Ampullen 2 jeweils in einem rautenförmigen Abschnitt (Ampullenhalteplatz) aufgenommen sind. Wird diese Anordnungsstruktur beispielsweise umgedreht (d. h. um 180° verschwenkt) und auf ein leeres Nest mit der gleichen Konfiguration aufgesetzt, würden die Ampullen 2 nicht in die rautenförmigen Aufnahmeplätze des neuen Nests hineinfallen, da die Aufnahmeplätze nicht übereinanderliegen. Um dieses Problem zu adressieren wird der Einsatz 1 der vorliegenden Erfindung herangezogen, um die Ampullen 2 in eine andere Anordnungsstruktur zu überführen, während die Ampullen 2 gewendet werden.

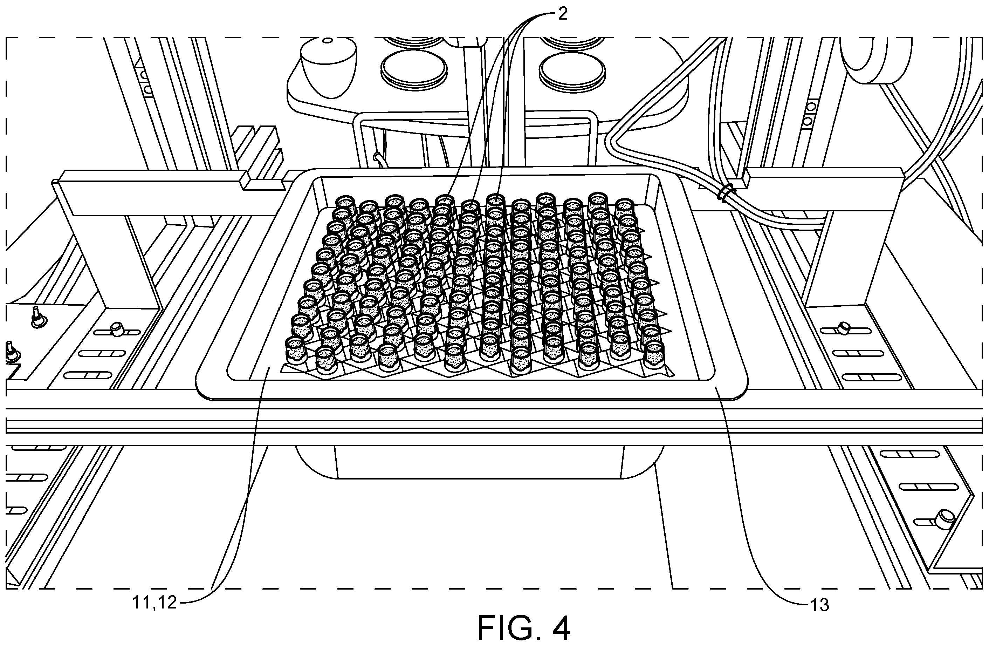

**Fig. 4** ist eine schematische und perspektivische Ansicht eines Tubs 13 mit einem Nest 11, 12, in welchem eine Vielzahl von Ampullen 2 aufgenommen sind. In dieser Situation befinden sich die Ampullen 2 in einer Orientierung, die eine Wendung der Ampullen 2 für eine darauf folgende Inspektion nötig macht. Mit anderen Worten sind die Ampullen 2 mit dem Boden nach oben orientiert. Somit stellt die in Fig. 4 dargestellte Situation eine Ausgangssituation vor dem Wenden der Ampullen 2 dar.

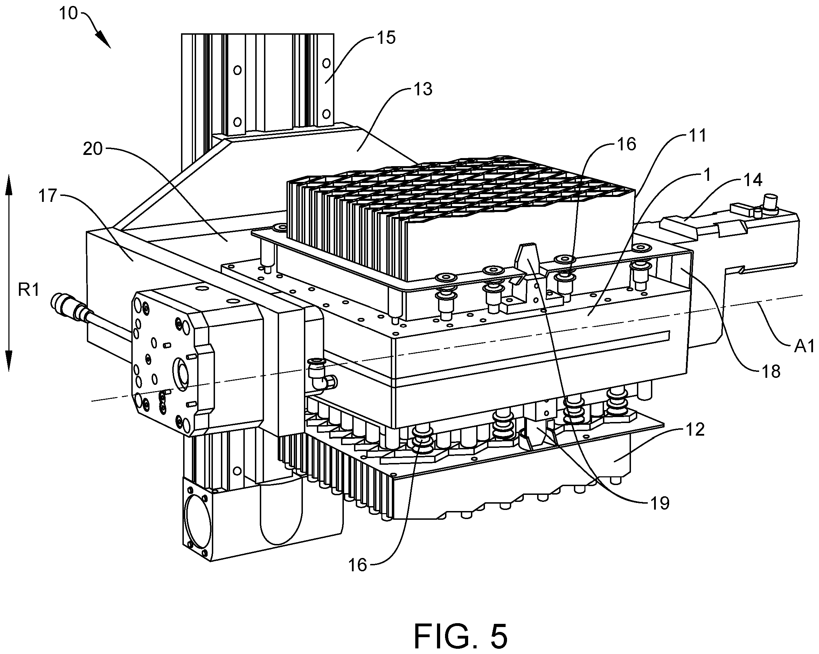

**Fig. 5** ist eine schematische und perspektivische Ansicht einer Wendevorrichtung 10 gemäß einer Ausführungsform der vorliegenden Erfindung. Die Wendevorrichtung 10 wird genutzt, um die medizinischen Ampullen 2 von der in Fig. 4 dargestellten Ausgangssituation in die in Fig. 3 dargestellte Endsituation zu überführen. Dazu ist der in Fig. 1 dargestellte Einsatz 1 in der Wendevorrichtung 10 angeordnet. Die Wendevorrichtung 10 weist zudem eine Haltevorrichtung 13 auf, die den Einsatz 1 halten kann. Dabei kann die Wendevorrichtung den Einsatz 1, um eine erste Achse A1 herum drehen. Dazu weist die Wendevorrichtung 10 zwei Aktuatoren 14 auf. Ferner kann die Haltevorrichtung 13 entlang einer ersten Richtung R1 bewegt werden (d.h. translatorisch). Bei der vorliegenden Ausführungsform erstreckt sich die erste Richtung R1 entlang der Schwererichtung (d. h. von unten nach oben). Die Wendevorrichtung 10 nimmt ein erstes Nest 11 und ein zweites Nest 12 an zwei gegenüberliegenden Seiten des Einsatzes 1 auf. Das erste Nest 11 weist die Ampullen 2 auf. Das zweite Nest 12 ist leer und identisch zu dem ersten Nest 11 ausgestaltet. Dadurch, dass das erste Nest 11 dem zweiten Nest 12 gegenüberliegt, liegen die jeweiligen Ampullenhalteplätze in den jeweiligen Nestern 11, 12 sich nicht gegenüber. Erst der Einsatz 1 verbindet über den Einführabschnitt 3, den Übergangsabschnitt 7 und den Ausgabeabschnitt 5 die Ampullenhalteplätze in dem ersten Nest 11 mit den Ampullenhalteplätzen in dem zweiten Nest 12. Durch Drehung der Wendevorrichtung 10 um die erste Achse A1 kann beliebig die Hauptbewegungsrichtung H der Ampullen durch den Einsatz gewählt werden. Bei der vorliegenden Ausführungsform werden die falsch herum in dem ersten Nest 11 angeordneten Ampullen 2 durch eine Drehung um die erste Achse A1 in das zweite Nest 12 durch den Einsatz 1 gefördert. In dem zweiten Nest 12 kommen die Ampullen 2 dann mit der Oberseite nach oben gewandt zum Liegen. Somit können alle Ampullen 2, die in dem ersten Nest 11 vorgesehen sind, auf einmal gewendet werden. Damit ist keine einzelne Handhabung einzelner Ampullen oder einzelner Ampullenreihen notwendig, sondern es kann direkt die gesamte Matrix an Ampullen aus dem ersten Nest 11 in das zweite Nest 12 überführt werden, um die Orientierung der Ampullen zu ändern. Die Wendevorrichtung 10 weist die Haltevorrichtung 13 auf, die den Einsatz 11 halten und bewegen kann. Dazu kann die Haltevorrichtung 13 einen ersten Arm 17 und einen zweiten Arm 18 aufweisen. Insgesamt kann die Haltevorrichtung 13 einen U-förmigen Querschnitt haben, wobei der erste Arm 17 und der zweite Arm 18 von einem Verbindungsarm 20 vorstehen. Der Verbindungsarm 20 kann an einem Ständer oder Mast 15 beweglich festgelegt sein. Genauer gesagt kann der Verbindungsarm 20 in einer Schiene geführt werden, welche an dem Ständer 15 vorgesehen ist. Dadurch kann die erste Bewegungsrichtung R1 definiert werden. In einer zu bevorzugenden Ausführungsform kann die Wendevorrichtung 10 automatisiert entlang der ersten Richtung R1, verschoben werden. Dies kann beispielsweise durch eine Gewindestange oder durch ein Zahnrad, welches mit einer Zahnschiene in Eingriff gebracht werden kann, realisiert sein. Dadurch ist ermöglicht, dass die Wendevorrichtung das erste Nest 11 aus einem Tub 13 herausheben kann. Dabei muss die Wendevorrichtung 10 das erste Nest 11 nur soweit aus dem Tub 13 herausheben, bis es um die erste Achse A1 gedreht werden kann. Das zweite Nest 13 kann von Anfang an, an einer Seite des Einsatzes 1, welcher den Ausgangsöffnungen 6 zugewandt ist, vorgesehen sein.

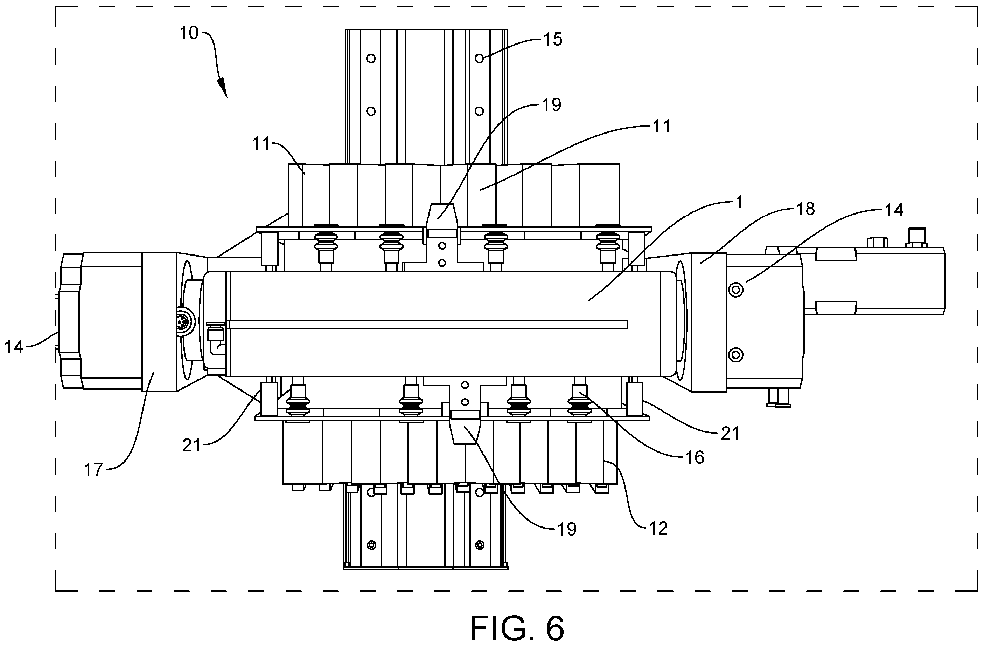

**Fig. 6** ist eine schematische Seitenansicht der Wendevorrichtung 10 gemäß einer Ausführungsform der vorliegenden Erfindung. Die vorliegende Ausführungsform entspricht, der in Fig. 5 dargestellten Ausführungsform. In Fig. 6 und Fig. 5 ist zu erkennen, dass eine Greifvorrichtung 16 an der Wendevorrichtung 10 vorgesehen ist. Die Greifvorrichtung 16 ist bei der vorliegenden Ausführungsform als Sauggreifer ausgestaltet. Insbesondere sind bei der vorliegenden Ausführungsform eine Vielzahl von Sauggreifern 16 angeordnet, die dazu ausgestaltet sind, ein Nest 11, 12 aus einem Tab 13 herauszuheben und zu halten. Dadurch kann sichergestellt sein, dass während dem Wendevorgang das Nest 11, 12 nicht von dem Einsatz 1 abfällt. Ferner umfasst die Wendevorrichtung der vorliegenden Ausführungsform eine Positionierungshilfe 19. Die Positionierungshilfe 19 ist bei der vorliegenden Ausführungsform als ein Vorsprung, der von dem Einsatz 1 vorspringt, ausgestaltet. Die Positionierhilfe 19 weist eine hin zum Außenende verjüngende Form auf. Somit kann die Positionierungshilfe 19 mit einer Öffnung in dem Nest 11, 12 zusammenwirken und somit die richtige Position des Nests relativ zu dem Einsatz 1 gewährleisten. Somit kann sichergestellt sein, dass sowohl die Einführöffnungen 4 als auch die Ausgabeöffnungen 6 jeweils einem Ampullenhalteplatz in dem ersten Nest 11 und dem zweiten Nest 12 gegenüberliegenden. Ferner weist die Wendevorrichtung eine Vielzahl von Distanzelementen 20 auf, die dazu ausgestaltet sind, einen Abstand zwischen dem von der Wendevorrichtung 10 gegriffenen Nests 11, 12 und dem Einsatz 1 beizubehalten. Damit kann verhindert werden, dass Ampullen 2, die in dem Nest 11, 12 aufgenommen sind durch direkten Kontakt mit dem Einsatz oder sonstigen Gegenständen Schaden nehmen. Die Distanzelemente können beispielsweise zylindrische Stäbe sein, die von der Wendevorrichtung vorstehen. Die Distanzelemente können das Nest 11, 12 direkt kontaktieren.

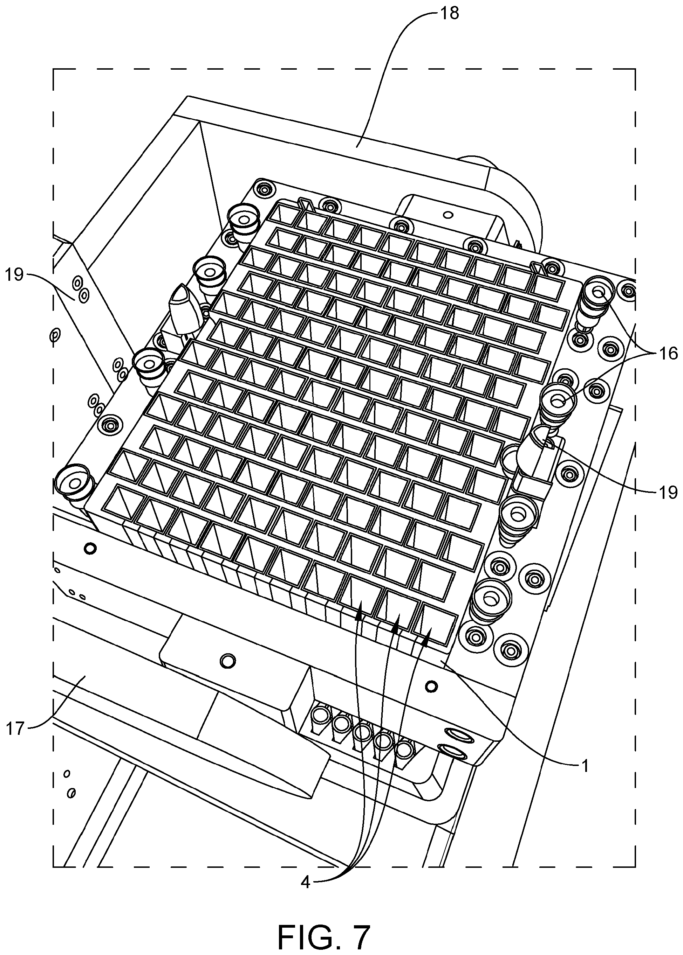

**Fig. 7** ist eine perspektivische Ansicht auf die Wendevorrichtung 10, ohne dass ein Nest 11, 12 daran vorgesehen ist. Zu erkennen ist die Oberseite des Einsatzes 1 mit den daran vorgesehenen Einführöffnungen 4. Ferner sind die Saugreifer 16 erkennbar. Bei der vorliegenden Ausführungsform sind acht Saugreifer 16 vorgesehen, wovon an jeder Seite vier angeordnet sind. Die Positionierhilfe 19 ist mittig an jeder Seite des Einsatzes 1, vorgesehen. Bei der vorliegenden Ausführungsform weisen die Einführöffnungen 4 einen rechteckigen Querschnitt auf. Darauffolgend sind die Führungsmittel 8 ebenfalls mit einem rechteckigen Querschnitt vorgesehen. Darauffolgend sind die Ausgabeöffnungen 6 ebenfalls mit einem eckigen Querschnitt vorgesehen. In einer weiteren nicht dargestellten Ausführungsform sind die Querschnitte der Einführöffnungen 4, der Führungsmittel 8 und der Ausgabeöffnungen 6 mit einem runden Querschnitt versehen.

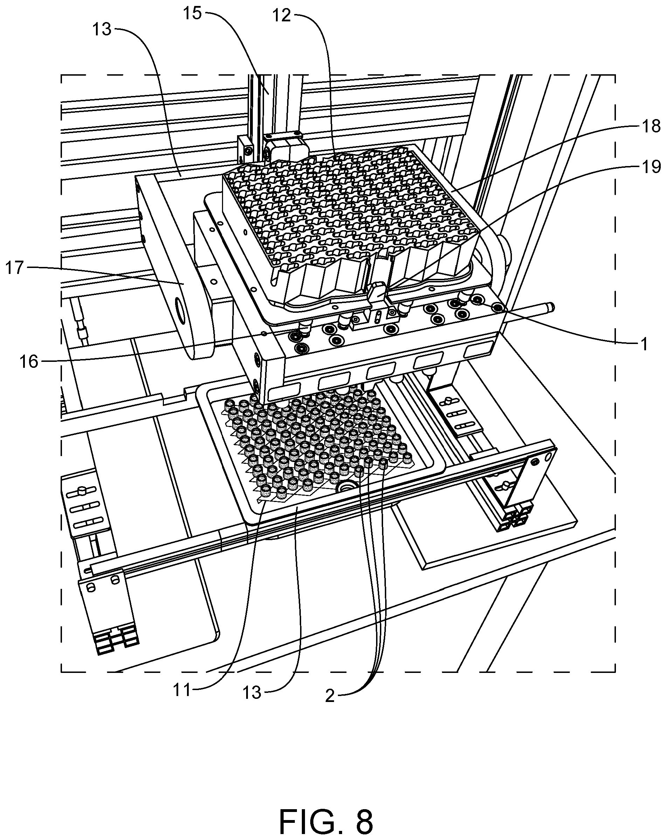

**Fig. 8** ist eine perspektivische Ansicht der Wendevorrichtung unmittelbar vor dem Aufgreifen eines ersten Nestes 11. Zu erkennen ist, dass ein zweites Nest 12, welches leer ist, an einer Seite des Einsatzes 1 angeordnet ist. Unterhalb der Wendevorrichtung 10 wird ein mit Ampullen 2 befüllter Tub 13 mit einem Nest 11 bereitgestellt. Daraufhin wird die Wendevorrichtung 10 entlang der ersten Richtung R1 auf das erste Nest 11 zubewegt. Bei Kontakt mit dem ersten Nest 11 wird die Positionierhilfe die Position des ersten Nestes 11 feinjustieren bis die reifer Sauggreifer 16 in Kontakt mit dem ersten Nest kommen. Dann wird das erste Nest 11 angesaugt und in der ersten Richtung R1 aus dem Tub 13 herausgehoben. Oberhalb des Tubs 13 wird der Einsatz 1, um die erste Achse A1 gedreht, sodass die Ampullen 2 von dem ersten Nest 11 durch den Einsatz 1 in das zweite Nest 12 transferiert werden. Die Drehgeschwindigkeit um die erste Achse wird von einer Steuereinheit gesteuert. Bei einer bevorzugten Ausführungsform kann die Steuereinheit (in den Figuren nicht dargestellt) die Drehung so steuern, dass nach Überwinden der Haftreibung der Ampullen 2 in dem ersten Nest 11 der Einsatz 1 angehalten oder in die entgegengesetzte Richtung gedreht wird. Dadurch kann eine übermäßig große Beschleunigung der Ampullen 2, in der Hauptförderrichtung H vermieden werden. Sind die Ampullen 2 dann in dem zweiten Nest 12 angekommen, kann die Drehung vollendet werden, sodass der Einsatz einmal um 180° gedreht wurde. Das zweite Nest 12 kann dann durch eine Bewegung der Wendevorrichtung 10 in der ersten Richtung wieder in den ursprünglichen Tub 13 eingeführt werden. Dadurch kann eine Identifizierung, welche an dem Tub 13 angeordnet beibehalten werden, da dieselben Ampullen 2 wieder in demselben Tub 13 angeordnet sind (nur mit einem anderen Nest). Die Steuereinheit kann ferner dazu ausgestaltet sein, dass die neue Position der Ampullen 2 mit den Daten, welche auf dem Tub 13 angeordnet sind, abgeglichen werden, sodass hinterlegt ist, welche Ampulle 2, an welchem Platz in dem zweiten Nest 12 angeordnet ist. Mit anderen Worten kann der Platz einer Ampulle 2, wie er in dem ersten Nest 11 vorhanden war, durch die Steuereinheit so umgerechnet werden, dass bekannt ist, wo dieselbe Ampulle in dem zweiten Nest 12 angeordnet ist. Damit ist eine Zurückverfolgung der Ampullen durch den ganzen Prozess der Handhabung der Ampullen 2 ermöglicht.

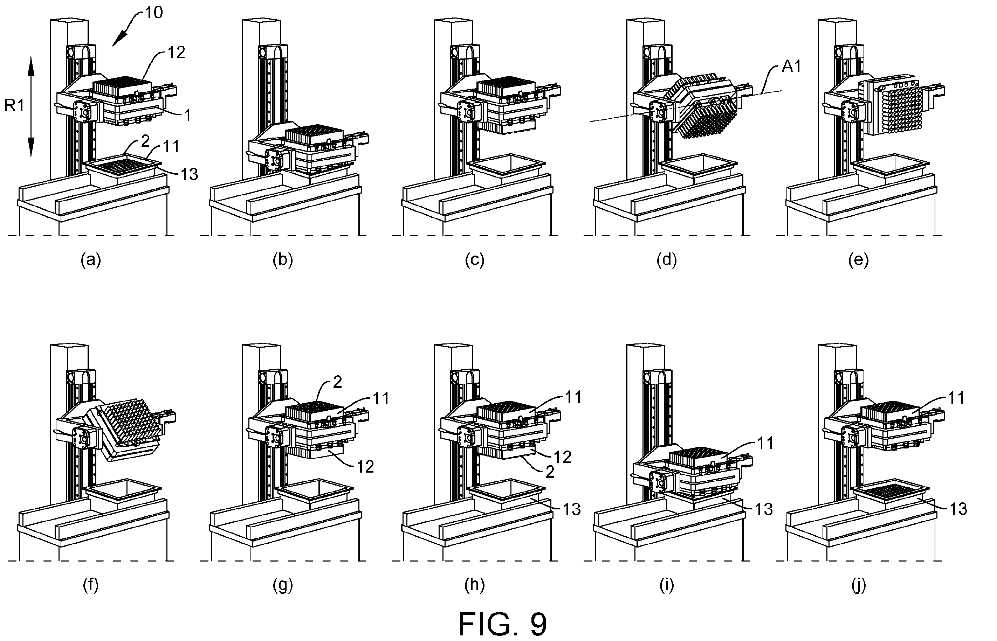

**Fig. 9** zeigt zehn Einzelbilder (a) bis j)), die den Arbeitsschritt des Wendens von medizinischen Ampullen verdeutlicht. Fig. 9a) zeigt ein Bereitstellen von medizinischen Ampullen 2 in einem Nest 11, welches in einem Tab 13 angeordnet ist. In Fig. 9b) wird die Wendevorrichtung 10 auf das erste Nest 11 herabgelassen und durch die Saugreifer gegriffen. Die Wendevorrichtung weist bereits ein zweites Nest 12 an der gegenüberliegenden Seite des Einsatzes 1 auf. In Fig. 9c) wird das Nest 11 aus dem Tub 13 in der ersten Bewegungsrichtung R1 herausgehoben. In Fig. 9d) beginnt eine Drehung um die erste Drehachse A1, um die Ampullen 2 aus dem ersten Nest 11 in das zweite Nest 12 zu überführen. In Fig. 9e) ist die Drehung um 90° erfolgt, wobei noch keine Ampulle 2 von dem ersten Nest 11 in das zweite Nest 12 überführt wurde. In Fig. 9f) wird die Drehung weiter um die erste Achse A1 fortgeführt. In Fig. 9G ist die Drehung um die erste Achse A1 abgeschlossen, wodurch der Einsatz 1 zusammen mit dem ersten Nest 11 um 180° gedreht wurde. In Fig. 9h) wird ein Verschluss geöffnet und damit der Durchgang für die Ampullen 2 durch den Einsatz 1 freigegeben. Schwerkraftgetrieben gelangen die Ampullen von dem ersten Nest 11 durch den Einsatz 1 in das zweite Nest 12. In Fig. 9i) bewegt sich die Wendevorrichtung 10 wieder entlang der ersten Richtung R1 abwärts, um das zweite Nest 12 mit den nun gewendeten Ampullen 2 wieder in den Tub 13 einzufügen. In Fig. 9j) wird die Wendevorrichtung 10 entlang der ersten Richtung R1 wieder nach oben gefahren, um den Tub 13 freizugeben für eine weitere Bearbeitung.

Die in Fig. 9 dargestellten Wendevorrichtung 10 unterscheidet sich von der zuvor dargestellten Wendevorrichtung 10 dadurch, dass der Durchgang durch den Einsatz 1 durch eine Sperre (Nicht dargestellt in Figuren) freigegeben und verschlossen werden kann. Das heißt hier kann aktiv gesteuert werden, wann die Ampullen 2 durch den Einsatz 1 hindurch transferiert werden können. Bei den zuvor beschriebenen Ausführungsformen begann ein Transfer der Ampullen 2 bei Überwinden der Haftreibung zwischen Ampulle und Nest. Bei der vorliegenden Ausführungsform wird dies aktiv durch die Sperre gesteuert.

In einer weiteren nicht dargestellten Ausführungsform ist es denkbar, dass eine Vielzahl von Wendevorrichtungen 10 entlang einer Abfertigungslinie angeordnet sind, um parallel mehrere Nester wenden zu können. Damit kann der Output weiter erhöht werden.

### Bezugszeichenliste

- 1: Einsatz
- 2: Ampulle
- 3: Einführabschnitt
- 4: Einführöffnung
- 5: Ausgabeabschnitt
- 6: Ausgabeöffnung
- 7: Übergangsabschnitt
- 8: Führungsmittel
- 10: Wendevorrichtung
- 11: erstes Nest
- 12: zweites Nest
- 13: tub
- 14: Aktuator
- 15: Stange
- 16: Sauggreifer
- 17: erster Arm
- 18: zweiter Arm
- 19: Positionierhilfe
- 20: Verbindungarm
- 21: Distanzelement
- H: Hauptbewegungsrichtung
- R1: erste Richtung
- H1: erste Achse

## Patentansprüche

1. Einsatz (1) für eine Wendevorrichtung (10) für medizinische Ampullen (2), umfassend:
einen Einführabschnitt (3), der eine Vielzahl von Einführöffnungen (4) zur Aufnahme von jeweils einer Ampulle (2) aufweist, wobei die Einführöffnungen (4) in einer ersten Anordnungsstruktur vorgesehen sind,
einen Ausgabeabschnitt (5), der eine Vielzahl von Ausgabeöffnungen (6) zur Ausgabe von jeweils einer Ampulle (2) aufweist, wobei die Ausgabeöffnungen (6) in einer zweiten Anordnungsstruktur vorgesehen sind, und
einen Übergangsabschnitt (7), der eine Vielzahl von Führungsmittel (8) aufweist, wobei der Übergangsabschnitt (7) so angeordnet und/oder ausgestaltet ist, dass Ampullen (2) von den Einführöffnungen (4) durch die Führungsmittel (8) geführt zu den Ausgabeöffnungen (6) gelangen können,
wobei die Einführöffnungen (4) und die Ausgabeöffnungen (6) relativ zueinander exzentrisch angeordnet sind.

2. Einsatz (1) gemäß Anspruch 1, wobei die Einführöffnungen (4) und die Ausgabeöffnungen (6) in einer Draufsicht auf den Einsatz (1) versetzt zueinander angeordnet sind.

3. Einsatz (1) gemäß Anspruch 1 oder 2, wobei der Einführabschnitt (3), der Ausgabeabschnitt (5) und der Übergangsabschnitt (7) integral ausgebildet sind.

4. Einsatz (1) gemäß einem der vorhergehenden Ansprüche, wobei jedes Führungsmittel (8) zumindest einen Bremsabschnitt umfasst, der dazu ausgestaltet ist, eine Bewegungsgeschwindigkeit einer Ampullen (2) beim Führen von dem Einführabschnitt (3) zu dem Ausgabeabschnitt (5) zu reduzieren.

5. Einsatz (1) gemäß einem der vorhergehenden Ansprüche, wobei der Einsatz (1) Polyoxymethylene, Polyamid, Polytetrafluorethylen und/oder Polyethylenterephthalat umfasst.

6. Wendevorrichtung (10) zum Wenden von medizinischen Ampullen (2), umfassend:
einen Einsatz (1) gemäß einem der vorhergehenden Ansprüche,
eine Haltevorrichtung (13) zum Halten des Einsatzes (1),
wobei die Haltevorrichtung (13) dazu ausgestaltet ist, den Einsatz (1) entlang einer ersten Richtung (R1) zu bewegen,
wobei die Haltevorrichtung (13) dazu ausgestaltet ist, den Einsatz (1) um eine erste Achse (A1) zu drehen.

7. Wendevorrichtung (10) gemäß Anspruch 6, wobei die erste Richtung (R1) und die erste Achse (A1) orthogonal zueinander stehen.

8. Wendevorrichtung (10) gemäß Anspruch 6 oder7, wobei sich die erste Richtung (R1) entlang der Schwererichtung erstreckt.

9. Wendevorrichtung (10) gemäß einem der Ansprüche 6 bis 8, wobei die Wendevorrichtung (10) einen Aktuator (14) umfasst, wobei der Aktuator(14) dazu ausgestaltet ist, die Bewegung in der ersten Richtung (R1) und die Drehung um die erste Achse (A1) auszuführen.

10. Wendevorrichtung (10) gemäß einem der Ansprüche 6 bis 9, wobei die Wendevorrichtung (10) eine Steuereinheit aufweist, die dazu ausgestaltet ist, eine ursprüngliche Position der medizinischen Ampullen (2) zu erlangen und eine neue Position der medizinischen Ampullen (2) nach Verlassen der AusgabeÖffnungen (6) zu bestimmen.

11. Wendevorrichtung (10) gemäß einem der Ansprüche 6 bis 10, wobei die Haltevorrichtung (13) dazu ausgestaltet ist, ein erstes Nest (11) mit einer Vielzahl von Ampullenhalteplätzen so zu halten, dass jeweils ein Ampullenhalteplatz einer der Einführöffnungen (4) gegenüberliegt, und/oder
wobei die Haltevorrichtung (13) dazu ausgestaltet ist, ein zweites Nest (12) mit einer Vielzahl von Ampullenhalteplätzen so zu halten, dass jeweils ein Ampullenhalteplatz einer der Ausgabeöffnung (6) gegenüberliegt.

12. Wendevorrichtung (10) gemäß einem der Ansprüche 6 bis 11, wobei die Haltevorrichtung (10) eine Saugvorrichtung ist.

13. Wendevorrichtung (10) gemäß einem der Ansprüche 6 bis 12, wobei die Wendevorrichtung (10) zumindest eine Positionierhilfe (19) umfasst, die dazu ausgestaltet ist, eine vorbestimmte Position eines Nestes (11,12) bei Kontakt des Nestes (11,12) mit der Wendevorrichtung (10) sicherzustellen.

14. Verfahren zum Wenden von medizinischen Ampullen (2) mittels eines Einsatzes (1), umfassend:
Bereitstellen einer Vielzahl von medizinischen Ampullen (2) in einer ersten Anordnungsstruktur,
Aufnehmen der Ampullen (2) in jeweils eine Einführöffnungen (4) des Einsatzes (1),
Führen der Ampullen (2) durch ein Führungsmittel (8) des Einsatzes (1) von den Einführöffnungen (4) zu Ausgabeöffnungen (6) des Einsatzes (1),
Ausgeben der Ampullen aus den Ausgabeöffnungen (6) in einer zweiten Anordnungsstruktur,
wobei sich die erste Anordnungsstruktur von der zweiten Anordnungsstruktur unterscheidet.

15. Verfahren gemäß Anspruch 14, wobei die Ampullen (2) in einem ersten Nest (11) bereitgestellt werden, wobei das Verfahren ein Halten des ersten Nestes (11) an dem Einsatz (1) umfasst.

## Claims

1. Insert (1) for a turning device (10) for medical ampoules (2), comprising:
an input section (3) which has a plurality of input apertures (4) for receiving a respective ampoule (2), wherein the input apertures (4) are provided in a first arrangement structure,
a dispensing section (5) having a plurality of output apertures (6) for dispensing one ampoule (2) at a time, wherein the output apertures (6) are provided in a second arrangement structure, and
a transition section (7) which has a plurality of guide means (8), the transition section (7) being arranged and/or designed in such a way that ampoules (2) can pass from the input apertures (4) through the guide means (8) to the output apertures (6),
wherein the input apertures (4) and the outlet apertures (6) are arranged eccentrically relative to each other.

2. Insert (1) according to claim 1, wherein the input apertures (4) and the output apertures (6) are arranged offset relative to one another in a plan view of the insert (1).

3. Insert (1) according to claim 1 or 2, wherein the input section (3), the output section (5) and the transition section (7) are integrally formed.

4. Insert (1) according to any one of the preceding claims, wherein each guiding means (8) comprises at least one braking portion configured to reduce a speed of movement of an ampoule (2) when guiding from the input portion (3) to the dispensing portion (5).

5. Insert (1) according to any one of the preceding claims, wherein the insert (1) comprises polyoxymethylenes, polyamide, polytetrafluoroethylene and/or polyethylene terephthalate.

6. Turning device (10) for turning medical ampoules (2), comprising:
an insert (1) according to one of the preceding claims,
a holding device (13) for holding the insert (1),
wherein the holding device (13) is designed to move the insert (1) along a first direction (R1),
wherein the holding device (13) is designed to rotate the insert (1) about a first axis (A1).

7. Turning device (10) according to claim 6, wherein the first direction (R1) and the first axis (A1) are orthogonal to each other.

8. Turning device (10) according to claim 6 or 7, wherein the first direction (R1) extends along the direction of gravity

9. Turning device (10) according to any one of claims 6 to 8, wherein the turning device (10) comprises an actuator (14), wherein the actuator (14) is configured to perform the movement in the first direction (R1) and the rotation about the first axis (A1).

10. Turning device (10) according to any one of claims 6 to 9, wherein the turning device (10) comprises a control unit configured to obtain an original position of the medical ampoules (2) and to determine a new position of the medical ampoules (2) after leaving the output apertures (6).

11. Turning device (10) according to one of claims 6 to 10, wherein the holding device (13) is designed to hold a first nest (11) with a plurality of ampoule holding positions in such a way that one ampoule holding position is opposite one of the input apertures (4) in each case, and/or
wherein the holding device (13) is designed to hold a second nest (12) with a plurality of ampoule holding locations in such a way that one ampoule holding location is opposite one of the output apertures (6).

12. Turning device (10) according to any one of claims 6 to 11, wherein the holding device (10) is a suction device

13. Turning device (10) according to any one of claims 6 to 12, wherein the turning device (10) comprises at least one positioning aid (19) configured to ensure a predetermined position of a nest (11, 12) upon contact of the nest (11, 12) with the turning device (10).

14. Method for turning medical ampoules (2) by means of an insert (1), comprising:
Providing a plurality of medical ampoules (2) in a first arrangement structure,
Pick up the ampoules (2) in one of the input apertures (4) of the insert (1),
Guiding the ampoules (2) through a guide means (8) of the insert (1) from the input apertures (4) to the output apertures (6) of the insert (1),
Dispensing the ampoules from the output apertures (6) in a second arrangement structure,
such that the first arrangement structure differs from the second arrangement structure.

15. Method according to claim 14, wherein the ampoules (2) are provided in a first nest (11), wherein the method comprises holding the first nest (11) on the insert (1).

## Revendications

1. Insert (1) pour un dispositif de retournement (10) pour ampoules médicales (2), comprenant :
une portion d'introduction (3) qui présente une pluralité d'ouvertures d'introduction (4) destinées à recevoir chacune une ampoule (2), les ouvertures d'introduction (4) étant prévues dans une première structure d'agencement,
une portion de distribution (5) qui présente une pluralité d'ouvertures de distribution (6) destinées à distribuer chacune une ampoule (2), les ouvertures de distribution (6) étant prévues dans une deuxième structure d'agencement, et
une portion de transition (7) qui présente une pluralité de moyens de guidage (8), la portion de transition (7) étant agencée et/ou conçue de telle sorte que les ampoules (2) peuvent passer des ouvertures d'introduction (4) aux ouvertures de distribution (6) en étant guidées par les moyens de guidage (8),
les ouvertures d'introduction (4) et les ouvertures de distribution (6) étant disposées de manière excentrée les unes par rapport aux autres.

2. Insert (1) selon la revendication 1,
dans lequel les ouvertures d'introduction (4) et les ouvertures de distribution (6) sont décalées les unes par rapport aux autres dans une vue en plan de l'insert (1).

3. Insert (1) selon la revendication 1 ou 2,
dans lequel la portion d'introduction (3), la portion de distribution (5) et la portion de transition (7) sont réalisées intégralement.

4. Insert (1) selon l'une des revendications précédentes,
dans lequel chaque moyen de guidage (8) comprend au moins une portion de freinage conçue pour réduire la vitesse de déplacement d'une ampoule (2) lors du guidage depuis la portion d'introduction (3) vers la portion de distribution (5).

5. Insert (1) selon l'une des revendications précédentes,
dans lequel l'insert (1) comprend du polyoxyméthylène, du polyamide, du polytétrafluoroéthylène et/ou du polytéréphtalate d'éthylène.

6. Dispositif de retournement (10) pour retourner des ampoules médicales (2), comprenant :
un insert (1) selon l'une des revendications précédentes,
un dispositif de maintien (13) pour maintenir l'insert (1),
le dispositif de maintien (13) étant conçu pour déplacer l'insert (1) le long d'une première direction (R1),
le dispositif de maintien (13) étant conçu pour faire tourner l'insert (1) autour d'un premier axe (A1).

7. Dispositif de retournement (10) selon la revendication 6,
dans lequel la première direction (R1) et le premier axe (A1) sont orthogonaux l'un par rapport à l'autre.

8. Dispositif de retournement (10) selon la revendication 6 ou 7,
dans lequel la première direction (R1) s'étend le long de la direction de la pesanteur.

9. Dispositif de retournement (10) selon l'une des revendications 6 à 8,
dans lequel le dispositif de retournement (10) comprend un actionneur (14), l'actionneur (14) étant conçu pour effectuer le déplacement dans la première direction (R1) et la rotation autour du premier axe (A1).

10. Dispositif de retournement (10) selon l'une des revendications 6 à 9,
dans lequel le dispositif de retournement (10) comprend une unité de commande conçue pour obtenir une position initiale des ampoules médicales (2) et pour définir une nouvelle position des ampoules médicales (2) une fois qu'elles ont quitté les ouvertures de distribution (6).

11. Dispositif de retournement (10) selon l'une des revendications 6 à 10,
dans lequel le dispositif de maintien (13) est conçu pour maintenir un premier nid (11), présentant une pluralité d'emplacements de maintien d'ampoules, de telle sorte qu'un emplacement de maintien d'ampoule respectif se trouve en face de l'une des ouvertures d'introduction (4), et/ou
le dispositif de maintien (13) est conçu pour maintenir un deuxième nid (12), présentant une pluralité d'emplacements de maintien d'ampoules, de telle sorte qu'un emplacement de maintien d'ampoule respectif se trouve en face de l'une des ouvertures de distribution (6).

12. Dispositif de retournement (10) selon l'une des revendications 6 à 11,
dans lequel le dispositif de maintien (10) est un dispositif de succion.

13. Dispositif de retournement (10) selon l'une des revendications 6 à 12,
dans lequel le dispositif de retournement (10) comprend au moins un moyen d'aide au positionnement (19) conçu pour assurer une position prédéterminée d'un nid (11, 12) lorsque le nid (11, 12) entre en contact avec le dispositif de retournement (10).

14. Procédé pour retourner des ampoules médicales (2) à l'aide d'un insert (1), consistant à :
fournir une pluralité d'ampoules médicales (2) dans une première structure d'agencement,
recevoir les ampoules (2) dans des ouvertures d'introduction (4) respectives de l'insert (1),
guider les ampoules (2) depuis les ouvertures d'introduction (4) vers des ouvertures de distribution (6) de l'insert (1) à l'aide d'un moyen de guidage (8) de l'insert (1),
distribuer les ampoules hors des ouvertures de distribution (6) dans une deuxième structure d'agencement,
la première structure d'agencement étant différente de la deuxième structure d'agencement.

15. Procédé selon la revendication 14,
dans lequel les ampoules (2) sont fournies dans un premier nid (11), le procédé comprenant le maintien du premier nid (11) sur l'insert (1).
